# EUROPÄISCHE PATENTSCHRIFT

(11) **EP 1 206 456 B1**
(45) Veröffentlichungstag und Bekanntmachung des Hinweises auf die Patenterteilung: **17.11.2004**
(21) Anmeldenummer: 00958457.4
(22) Anmeldetag: 16.08.2000
(51) Int. Cl.: C07D 221/18, C09B 5/62

(54) **THERMOCHROME RYLENFARBSTOFFE**
THERMOCHROMIC RYLENE DYES
COLORANTS DE RYLENE THERMOCHROMES

(30) Priorität: 27.08.1999 DE 19940708
(43) Veröffentlichungstag der Anmeldung: 22.05.2002
(73) Patentinhaber: BASF AKTIENGESELLSCHAFT, 67056 Ludwigshafen (DE); Max-Planck-Gesellschaft zur Förderung der Wissenschaften e.V., 80539 München (DE)
(72) Erfinder: BÖHM, Arno, D-68305 Mannheim (DE); SCHMEISSER, Heinrich, D-68775 Ketsch (DE); BECKER, Stefan, D-55127 Mainz (DE); MÜLLER, Klaus, D-50939 Köln (DE)
(86) Internationale Anmeldenummer: PCT/EP2000/007985
(87) Internationale Veröffentlichungsnummer: WO 2001/016109

(56) Entgegenhaltungen:
- EP-A- 0 596 292
- EP-A- 0 657 436
- WO-A-96/22331
- WO-A-96/22332
- WO-A-97/22607

## Beschreibung

Die vorliegende Erfindung betrifft neue Rylenfarbstoffe der allgemeinen Formel I 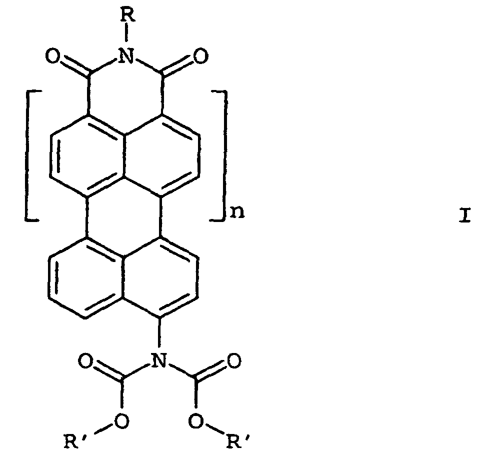 in der die Variablen folgende Bedeutung haben:
- R: Wasserstoff oder C₁-C₃₀-Alkyl, dessen Kohlenstoffkette durch eine oder mehrere Gruppierungen -O-, -S-, -NR¹-, -CO- und/oder -SO₂- unterbrochen sein kann und das durch Cyano, C₁-C₆-Alkoxy, Phenyl oder 2-Naphthyl, das jeweils durch C₁-C₁₈-Alkyl oder C₁-C₆-Alkoxy substituiert sein kann, oder einen über ein Stickstoffatom gebundenen 5- bis 7-gliedrigen heterocyclischen Rest, der weitere Heteroatome enthalten und aromatisch sein kann, ein- oder mehrfach substituiert sein kann;
C₅-C₈-Cycloalkyl, dessen Kohlenstoffgerüst durch eine oder mehrere Gruppierungen -O-, -S- und/oder -NR¹- unterbrochen sein kann und das durch C₁-C₆-Alkyl ein- oder mehrfach substituiert sein kann;
Phenyl, 2-Naphthyl, 2- oder 3-Pyrryl, 2-, 3- oder 4-Pyridyl, 2-, 4- oder 5-Pyrimidyl, 3-, 4- oder 5-Pyrazolyl, 2-, 4- oder 5-Imidazolyl, 2-, 4- oder 5-Thiazolyl, 3-(1,2,4-Triazyl), 2-(1,3,5-Triazyl), 6-Chinaldyl, 3-, 5-, 6- oder 8-Chinolinyl, 2-Benzoxazolyl, 2-Benzothiazolyl, 5-Benzothiadiazolyl, 2- oder 5-Benzimidazolyl oder 1- oder 5-Isochinolyl, das jeweils durch C₁-C₁₈-Alkyl, C₁-C₆-Alkoxy, Cyano, -CONHR², -NHCOR² und/oder Phenylazo, 2-Naphthylazo, 2-Pyridylazo oder 2-Pyrimidylazo, das jeweils durch C₁-C₁₀-Alkyl, C₁-C₆-Alkoxy oder Cyano substituiert sein kann, ein- oder mehrfach substituiert sein kann;
- R': C₂-C₃₀-Alkyl, dessen Kohlenstoffkette durch eine oder mehrere Gruppierungen -O- und/oder -CO- unterbrochen sein kann und das durch Cyano, C₁-C₆-Alkoxy, C₅-C₈-Cycloalkyl, dessen Kohlenstoffgerüst durch eine oder mehrere Gruppierungen -O-, -S- und/oder -NR¹- unterbrochen sein kann und das durch C₁-C₆-Alkyl substituiert sein kann, Aryl, das durch C₁-C₆-Alkyl substituiert sein kann, Aryl, Phenyl oder 2-Naphthyl, das jeweils durch C₁-C₁₈-Alkyl oder C₁-C₆-Alkoxy substituiert sein kann, oder einen über ein Stickstoffatom gebundenen 5- bis 7-gliedrigen heterocyclischen Rest, der weitere Heteroatome enthalten und aromatisch sein kann, ein- oder mehrfach substituiert sein kann;
Methyl, das durch Phenyl, 2-Naphthyl, 2- oder 3-Pyrryl, 2-, 3- oder 4-Pyridyl, 2-, 4- oder 5-Pyrimidyl, 3-, 4- oder 5-Pyrazolyl, 2-, 4- oder 5-Imidazolyl, 2-, 4- oder 5-Thiazolyl, 3-(1,2,4-Triazyl), 2-(1,3,5-Triazyl), 6-Chinaldyl, 3-, 5-, 6- oder 8-Chinolinyl, 2-Benzoxazolyl, 2-Benzothiazolyl, 5-Benzothiadiazolyl, 2- oder 5-Benzimidazolyl oder 5-Isochinolyl und/oder C₅-C₈-Cycloalkyl, das jeweils durch C₁-C₁₈-Alkyl oder C₁-C₆-Alkoxy substituiert sein kann, ein- oder zweifach substituiert ist;
C₅-C₈-Cycloalkyl, dessen Kohlenstoffgerüst durch eine oder mehrere Gruppierungen -O-, -S- und/oder -NR¹- unterbrochen sein kann und das durch C₁-C₆-Alkyl ein- oder mehrfach substituiert sein kann;
- R¹: Wasserstoff oder C₁-C₆-Alkyl;
- R²: Wasserstoff; C₁-C₁₈-Alkyl; Phenyl, 2-Naphthyl, 2- oder 3-Pyrryl, 2-, 3- oder 4-Pyridyl, 2-, 4- oder 5-Pyrimidyl, 3-, 4- oder 5-Pyrazolyl, 2-, 4- oder 5-Imidazolyl, 2-, 4- oder 5-Thiazolyl, 3-(1,2,4-Triazyl), 2-(1,3,5-Triazyl), 6-Chinaldyl, 3-, 5-, 6- oder 8-Chinolinyl, 2-Benzoxazolyl, 2-Benzothiazolyl, 5-Benzothiadiazolyl, 2- oder 5-Benzimidazolyl oder 1- oder 5-Isochinolyl, das jeweils durch C₁-C₆-Alkyl, C₁-C₆-Alkoxy oder Cyano substituiert sein kann;
- n: 0 oder 1,
sowie die Herstellung dieser Farbstoffe und ihre Verwendung zur Einfärbung von hochmolekularen organischen und anorganischen Materialien.

Außerdem betrifft die Erfindung die Herstellung von 9-Bromperylen-3,4-dicarbonsäureimiden IIIa und Aminorylendicarbonsäureimiden V sowie neue 9-Aminoperylen-3,4-dicarbonsäureimide der allgemeinen Formel Va 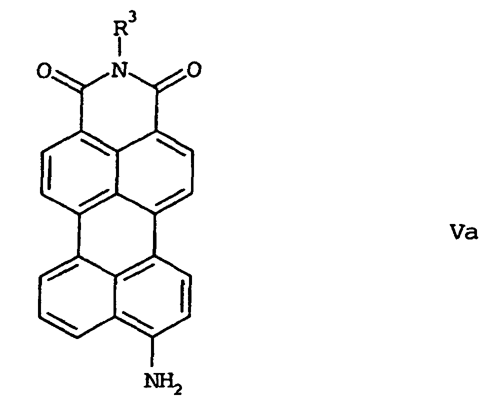 in der die Variablen folgende Bedeutung haben:
- R³: Wasserstoff oder C₁-C₃₀-Alkyl, dessen Kohlenstoffkette durch eine oder mehrere Gruppierungen -O-, -S-, -NR¹-, -CO- und/oder -SO₂- unterbrochen ist und/oder das durch Cyano, C₁-C₆-Alkoxy, Phenyl oder 2-Naphthyl, das jeweils durch C₁-C₁₈-Alkyl oder C₁-C₆-Alkoxy substituiert sein kann, oder einen über ein Stickstoffatom gebundenen 5- bis 7-gliedrigen heterocyclischen Rest, der weitere Heteroatome enthalten und aromatisch sein kann, ein- oder mehrfach substituiert ist; C₅-C₈-Cycloalkyl, dessen Kohlenstoffgerüst durch eine oder mehrere Gruppierungen -O-, -S- und/oder -NR¹- unterbrochen sein kann und das durch C₁-C₆-Alkyl ein- oder mehrfach substituiert sein kann;
Phenyl, 2-Naphthyl, 2- oder 3-Pyrryl, 2-, 3- oder 4-Pyridyl, 2-, 4- oder 5-Pyrimidyl, 3-, 4- oder 5-Pyrazolyl, 2-, 4- oder 5-Imidazolyl, 2-, 4- oder 5-Thiazolyl, 3-(1,2,4-Triazyl), 2-(1,3,5-Triazyl), 6-Chinaldyl, 3-, 5-, 6- oder 8-Chinolinyl, 2-Benzoxazolyl, 2-Benzothiazolyl, 5-Benzothiadiazolyl, 2-oder 5-Benzimidazolyl oder 1- oder 5-Isochinolyl, das jeweils durch C₁-C₁₈-Alkyl, C₁-C₆-Alkoxy, Cyano, -CONHR², -NHCOR² und/oder Phenylazo, 2-Naphthylazo, 2-Pyridylazo oder 2-Pyrimidylazo, das jeweils durch C₁-C₁₀-Alkyl, C₁-C₆-Alkoxy oder Cyano substituiert sein kann, ein- oder mehrfach substituiert sein kann, wobei
- R¹: Wasserstoff oder C₁-C₆-Alkyl;
- R²: Wasserstoff; C₁-C₁₈-Alkyl; Phenyl, 2-Naphthyl, 2- oder 3-Pyrryl, 2-, 3- oder 4-Pyridyl, 2-, 4- oder 5-Pyrimidyl, 3-, 4-oder 5-Pyrazolyl, 2-, 4- oder 5-Imidazolyl, 2-, 4- oder 5-Thiazolyl, 3-(1,2,4-Triazyl), 2-(1,3,5-Triazyl), 6-Chinaldyl, 3-, 5-, 6- oder 8-Chinolinyl, 2-Benzoxazolyl, 2-Benzothiazolyl, 5-Benzothiadiazolyl, 2- oder 5-Benzimidazolyl oder 1- oder 5-Isochinolyl, das jeweils durch C₁-C₆-Alkyl, C₁-C₆-Alkoxy oder Cyano substituiert sein kann;
als Zwischenprodukte für die Rylenfarbstoffe (I).

Am Imidstickstoffatom substituierte Perylen-3,4-dicarbonsäureimide, unsubstituiertes Perylen-3,4-dicarbonsäureimid und am Perylengerüst substituierte Perylen-3,4-dicarbonsäureimide eignen sich nicht nur als Pigmentvorstufen, sondern werden auch selbst vorteilhaft als Pigmente und Fluoreszenzfarbstoffe eingesetzt. Die bislang bekannten am Perylengerüst substituierten Perylen-3,4-dicarbonsäureimide sind in 1,6-, 1,7-, 1,6,9-, 1,7,9-und 1,6,7,12-Stellung sowie auch nur in 9-Stellung substituiert. In 9-Stellung trägt das Perylengerüst dabei jeweils ein Halogenatom, insbesondere Bromatom, (WO-A-96/22331, WO-A-96/22332,

EP-A-596 292 und WO-A-97/22607 und die dort zitierte Literatur sowie Dyes and Pigments 16, Seite 19-25 (1991)). In der EP-A-657 436 sowie Liebigs Annalen 1995, Seite 1229-1244, ist außerdem ein N-(1-Hexylheptyl)-9-aminoperylen-3,4-dicarbonsäureimid beschrieben, das durch Nitrierung des entsprechenden N-substituierten Perylen-3,4-dicarbonsäureimids mit Distickstofftetroxid und anschließende Reduktion mit metallischem Eisen in Gegenwart von Salzsäure hergestellt wird. Dieses Verfahren ist jedoch auf Perylen-3,4-dicarbonsäureimide beschränkt, die unsubstituierte Alkylgruppen am Imidstickstoffatom tragen, und liefert ausschließlich schwer zu reinigende Isomerengemische (1- und 9-Isomer) in niedrigen Ausbeuten. Entsprechende N-substituierte 4-Aminonaphthalin-1,8-dicarbonsäureimide sind aus Yuki Gosei Kagaku Kyokaishi 12, Seite 504-508 (1956) (s. Chemical Abstracts 51:8052a (1957)) bekannt.

In der EP-A-648 817 sind imidgruppenhaltige Fluoreszenzfarbstoffe beschrieben, deren Imidstickstoffatom zur reversiblen Solubilisierung in eine Carbamatfunktion überführt ist, die den Farbstoff im Anwendungsmedium löslich macht und thermisch wieder gespalten werden kann. Unter anderem wird hier auch unsubstituiertes Perylen-3,4-dicarbonsäureimid, dessen NH-Funktion entsprechend umgesetzt wird, als Fluoreszenzfarbstoff aufgeführt. Da die Solubilisierung über das Imidstickstoffatom erfolgt, besteht keine Möglichkeit, den Farbstoff über spezielle Substitution am Stickstoffatom zu modifizieren. Außerdem verändert sich der Farbton des Farbstoffs bei der thermischen Abspaltung der Alkoxycarbonyl-Schutzgruppe nicht, der Farbstoff ist nicht thermochrom.

Der Erfindung lag die Aufgabe zugrunde, weitere Farbstoffe mit vorteilhaften Anwendungseigenschaften, die insbesondere auch nicht nur gut in das jeweilige Anwendungsmedium einarbeitbar und an dieses Medium anpaßbar, sondern auch thermochrom sind, bereitzustellen.

Demgemäß wurden die eingangs definierten Rylenfarbstoffe der Formel I gefunden.

Bevorzugte Rylenfarbstoffe sind dem Unteranspruch zu entnehmen.

Weiterhin wurde ein Verfahren zur Herstellung der Rylenfarbstoffe I gefunden, welches dadurch gekennzeichnet ist, daß man
a) ein Perylen-3,4-dicarbonsäureimid der allgemeinen Formel IIa 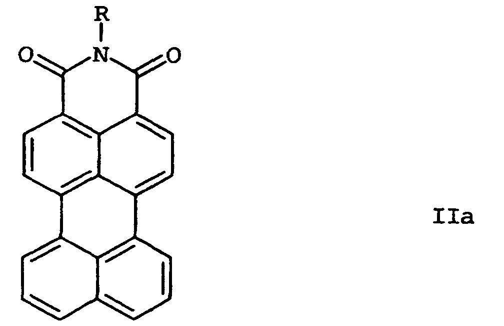 in Gegenwart einer aliphatischen Monocarbonsäure mit elementarem Brom regioselektiv monobromiert,
b1) das in Schritt a) gebildeten 9-Bromperylen-3,4-dicarbonsäureimid der allgemeinen Formel IIIa 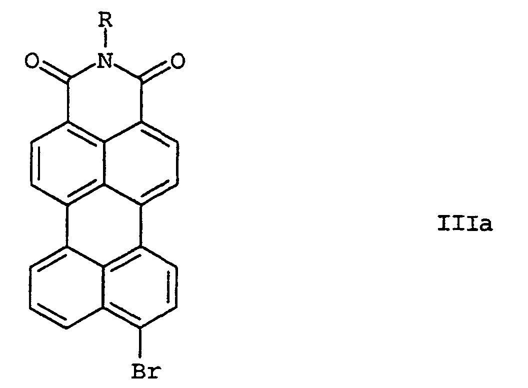 bzw. ein auf bekannte Weise durch Imidierung von 4-Bromnaphthalin-1,8-dicarbonsäureanhydrid hergestelltes 4-Bromnaphthalin-1,8-dicarbonsäureimid der allgemeinen Formel IIIb 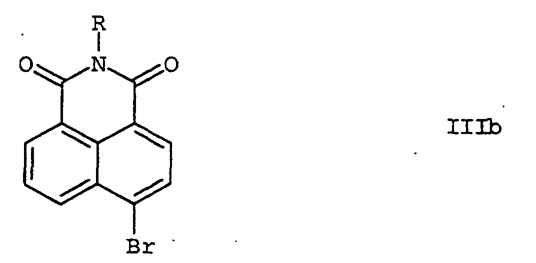 in Gegenwart eines.aprotischen organischen Lösungsmittels, eines Übergangsmetallkatalysatorsystems und einer Base in einer Aryl-N-Kupplungsreaktion mit einem Benzophenonimin der allgemeinen Formel IV 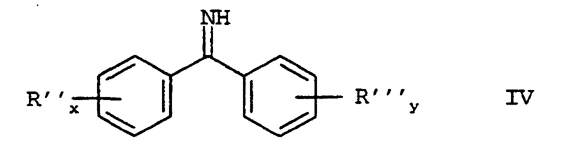 in der die Variablen
   - R'', R''': unabhängig voneinander Wasserstoff, C₁-C₆-Alkyl oder C₁-C₆-Alkoxy und
   - x, y: unabhängig voneinander eine ganze Zahl von 1 bis 3 bedeuten,
   umsetzt und
b2) das gebildete Ketimin in Gegenwart einer Säure und eines polaren, aprotischen Lösungsmittels zu einem Aminorylendicarbonsäureimid der allgemeinen Formel V 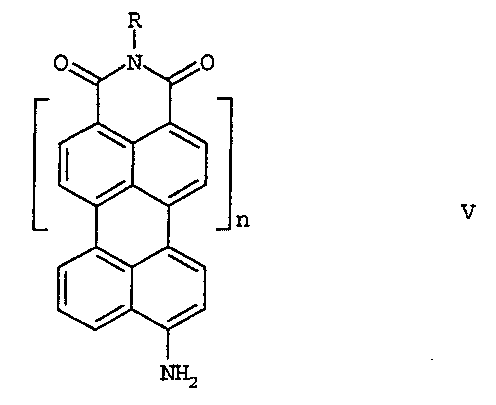 hydrolysiert und
c) dieses anschließend in Gegenwart eines polaren, aprotischen Lösungsmittels und einer Base mit einem Dicarbonat der allgemeinen Formel VI 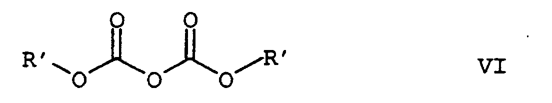 zu dem Rylenfarbstoff I umsetzt.

Außerdem wurde ein Verfahren zur Herstellung der Aminorylendicarbonsäureimide V gefunden, welches dadurch gekennzeichnet ist, daß man ein Bromrylendicarbonsäureimid III in Gegenwart eines aprotischen organischen Lösungsmittels, eines Übergangsmetallkatalysatorsystems und einer Base in einer Aryl-N-Kupplungsreaktion mit einem Benzophenonimin IV zu dem entsprechenden Ketimin umsetzt und dieses anschließend in Gegenwart einer Säure und eines polaren, aprotischen Lösungsmittels hydrolysiert.

Zudem wurden die 9-Aminoperylen-3,4-dicarbonsäureimide der eingangs definierten Formel Va als Zwischenprodukte für die Rylenfarbstoffe I gefunden.

Außerdem wurde ein Verfahren zur Herstellung der 9-Bromperylen-3,4-dicarbonsäureimide IIIa gefunden, welches dadurch gekennzeichnet ist, daß man ein Perylen-3,4-dicarbonsäureimid IIa in Gegenwart einer aliphatischen Monocarbonsäure mit elementarem Brom umsetzt.

Nicht zuletzt wurde die Verwendung der Rylenfarbstoffe I zur Einfärbung von hochmolekularen organischen und anorganischen Materialien gefunden.

Alle in den Formeln I bis VI auftretenden Alkylgruppen können sowohl geradkettig als auch verzweigt sein. Wenn die Alkylgruppen substituiert sind, tragen sie in der Regel 1 oder 2 Substituenten. Aromatische Reste, die substituiert sind, können im allgemeinen bis zu 3, bevorzugt 1 oder 2, der genannten Substituenten aufweisen. Bevorzugte Arylreste sind dabei Naphthyl und insbesondere Phenyl.

Als Beispiele für geeignete Reste R, R', R'', R''', R¹, R² und R³ (bzw. für deren Substituenten) seien im einzelnen genannt:
Methyl, Ethyl, Propyl, Isopropyl, Butyl, Isobutyl, tert.-Butyl, Pentyl, Isopentyl, Neopentyl, tert.-Pentyl, Hexyl, 2-Methylpentyl, tert.-Pentyl, Hexyl, 2-Methylpentyl, Heptyl, 1-Ethylpentyl, Octyl, 2-Ethylhexyl, Isooctyl, Nonyl, Isononyl, Decyl, Isodecyl, Undecyl, Dodecyl, Tridecyl, Isotridecyl, Tetradecyl, Pentadecyl, Hexadecyl, Heptadecyl, Octadecyl, Nonadecyl und Eicosyl (die obigen Bezeichnungen Isooctyl, Isononyl, Isodecyl und Isotridecyl sind Trivialbezeichnungen und stammen von den bei der Oxosynthese erhaltenen Alkoholen);
2-Methoxyethyl, 2-Ethoxyethyl, 2-Propoxyethyl, 2-Isopropoxyethyl, 2-Butoxyethyl, 2- und 3-Methoxypropyl, 2- und 3-Ethoxypropyl, 2-und 3-Propoxypropyl, 2- und 3- Butoxypropyl, 2- und 4-Methoxybutyl, 2- und 4-Ethoxybutyl. 2- und 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- und 4-Butoxybutyl, 4,8-Dioxadecyl, 3,6,9-Trioxadecyl, 3,6,9-Trioxaundecyl, 3,6,9-Trioxadodecyl, 3,6,9,12-Tetraoxatridecyl und 3,6,9,12-Tetraoxatetradecyl;
2-Methylthioethyl, 2-Ethylthioethyl, 2-Propylthioethyl, 2-Isopropylthioethyl, 2-Butylthioethyl, 2- und 3-Methylthiopropyl, 2- und 3-Ethylthiopropyl, 2- und 3-P=opylthiopropyl, 2- und 3-Butylthiopropyl, 2- und 4-Methylthiobutyl, 2- und 4-Ethylthiobutyl, 2- und 4-Propylthiobutyl, 3,6-Dithiaheptyl, 3,6-Dithiaoctyl, 4,8-Dithianonyl, 3,7-Dithiaoctyl, 3,7-Dithianonyl, 4,7-Dithiaoctyl, 4,7-Dithianonyl, 2- und 4-Butylthiobutyl, 4,8-Dithiadecyl, 3,6,9-Trithiadecyl, 3,6,9-Trithiaundecyl, 3,6,9-Trithiadodecyl, 3,6,9,12-Tetrathiatridecyl und 3,6,9,12-Tetrathiatetradecyl;
2-Monomethyl- und 2-Monoethylaminoethyl, 2-Dimethylaminoethyl, 2-und 3-Dimethylaminopropyl, 3-Monoisopropylaminopropyl, 2- und 4-Monopropylaminobutyl, 2- und 4-Dimethylaminobutyl, 6-Methyl-3,6-diazaheptyl, 3,6-Dimethyl-3,6-diazaheptyl, 3,6-Diazaoctyl, 3,6-Dimethyl-3,6-diazaoctyl, 9-Methyl-3,6,9-triazadecyl, 3,6,9-Trimethyl-3,6,9-triazaundecyl, 12-Methyl-3,6,9,12-tetraazatridecyl und 3,6,9,12-Tetramethyl-3,6,9,12-tetraazatridecyl;
Propan-2-on-1-yl, Butan-3-on-1-yl, Butan-3-on-2-yl und 2-Ethylpentan-3-on-1-yl;
2-Methylsulfonylethyl, 2-Ethylsulfonylethyl, 2-Propylsulfonylethyl, 2-Isopropylsulfonylethyl, 2-Buthylsulfonylethyl, 2- und 3-Methylsulfonylpropyl, 2- und 3-Ethylsulfonylpropyl, 2- und 3-Propylsulfonylpropyl, 2- und 3-Butylsulfonylpropyl, 2- und 4-Methylsulfonylbutyl, 2- und 4-Ethylsulfonylbutyl, 2- und 4-Propylsulfonylbutyl und 4-Butylsulfonylbutyl;
2-Cyanoethyl, 3-Cyanopropyl, 2-Methyl-3-ethyl-3-cyanopropyl, 7-Cyano-7-ethylheptyl und 4-Methyl-7-methyl-7-cyanoheptyl;
Methoxy, Ethoxy, Propoxy, Isopropoxy, Butoxy, Isobutoxy, sec.-Butoxy, tert.-Butoxy, Pentoxy, Isopentoxy, Neopentoxy, tert.-Pentoxy und Hexoxy;
Carbamoyl, Methylaminocarbonyl, Ethylaminocarbonyl, Propylaminocarbonyl, Butylaminocarbonyl, Pentylaminocarbonyl, Hexylaminocarbonyl, Heptylaminocarbonyl, Octylaminocarbonyl, Nonylaminocarbonyl, Decylaminocarbonyl und Phenylaminocarbonyl;
Formylamino, Acetylamino, Propionylamino und Benzoylamino;
Phenylazo, 2-Naphthylazo, 2-Pyridylazo und 2-Pyrimidylazo;
Cyclopentyl, 2- und 3-Methylcyclopentyl, 2- und 3-Ethylcyclopentyl, Cyclohexyl, 2-, 3- und 4-Methylcyclohexyl, 2-, 3- und 4-Ethylcyclohexyl, 3- und 4-Propylcyclohexyl, 3- und 4-Isopropylcyclohexyl, 3- und 4-Butylcyclohexyl, 3- und 4-sec.-Butylcyclohexyl, 3- und 4-tert.-Butylcyclohexyl, Cycloheptyl, 2-, 3- und 4-Methylcycloheptyl, 2-, 3- und 4-Ethylcycloheptyl, 3- und 4-Propylcycloheptyl, 3- und 4-Isopropylcycloheptyl, 3- und 4-Butylcycloheptyl, 3- und 4-sec.-Butylcycloheptyl, 3- und 4-tert.-Butylcycloheptyl, Cyclooctyl, 2-, 3-, 4- und 5-Methylcyclooctyl, 2-, 3-, 4- und 5-Ethylcyclooctyl, 3-, 4- und 5-Propylcyclooctyl, 2-Dioxanyl, 4-Morpholinyl, 2- und 3-Tetrahydrofuryl, 1-, 2- und 3-Pyrrolidinyl und 1-, 2-, 3- und 4-Piperidyl;
Phenyl, 2-Naphthyl, 2- und 3-Pyrryl, 2-, 3- und 4-Pyridyl, 2-, 4-und 5-Pyrimidyl, 3-, 4- und 5-Pyrazolyl, 2-, 4- und 5-Imidazolyl, 2-, 4- und 5-Thiazolyl, 3-(1,2,4-Triazyl), 2-(1,3,5-Triazyl), 6-Chinaldyl, 3-, 5-, 6- und 8-Chinolinyl, 2-Benzoxazolyl, 2-Benzothiazolyl, 5-3enzothiadiazolyl, 2- und 5-Benzimidazolyl und 1- und 5-Isochinolyl;
2-, 3- und 4-Methylphenyl, 2,4-, 3,5- und 2,6-Dimethylphenyl, 2,4,6-Trimethylphenyl, 2-, 3- und 4-Ethylphenyl, 2,4-, 3,5- und 2,6-Diethylphenyl, 2,4,6-Triethylphenyl, 2-, 3- und 4-Propylphenyl, 2,4-, 3,5- und 2,6-Dipropylphenyl, 2,4,6-Tripropylphenyl, 2-, 3- und 4-Isopropylphenyl, 2,4-, 3,5- und 2,6-Diisopropylphenyl, 2,4,6-Triisopropylphenyl, 2-, 3- und 4-Butylphenyl, 2,4-, 3,5- und 2,6-Dibutylphenyl, 2,4,6-Tributylphenyl, 2-, 3- und 4-Isobutylphenyl, 2,4-, 3,5- und 2,6-Diisobutylphenyl, 2,4,6-Triisobutylphenyl, 2-, 3- und 4-sec.-Butylphenyl, 2,4-, 3,5- und 2,6-Di-sec.-butylphenyl und 2,4,6-Tri-sec.-butylphenyl; 2,- 3- und 4-Methoxyphenyl, 2,4-, 3,5- und 2,6-Dimethoxyphenyl, 2,4,6-Trimethoxyphenyl, 2,- 3- und 4-Ethoxyphenyl, 2,4-, 3,5- und 2,6-Diethoxyphenyl, 2,4,6-Triethoxyphenyl, 2,- 3- und 4-Propoxyphenyl, 2,4-, 3,5- und 2,6-Dipropoxyphenyl, 2,- 3- und 4-Isopropoxyphenyl, 2,4-, 3,5- und 2,6-Diisopropoxyphenyl und 2,- 3- und 4-Butoxyphenyl; 2-, 3- und 4-Cyanophenyl; 3- und 4-Carboxyamidophenyl, 3- und 4-N-Methylcarboxamidophenyl; 3- und 4-Acetylaminophenyl, 3- und 4-Propionylaminophenyl und.3- und 4-Buturylaminophenyl; 3- und 4-N-Phenylaminophenyl, 3- und 4-N-(o-Tolyl)aminophenyl, 3- und 4-N-(m-Tolyl)aminophenyl und 3- und 4-N-(p-Tolyl)aminophenyl; 3- und 4-(2-Pyridyl)aminophenyl, 3- und 4-(3-Pyridyl)aminophenyl, 3- und 4-(4-Pyridyl)aminophenyl, 3- und 4-(2-Pyrimidyl)aminophenyl und 4-(4-Pyrimidyl)aminophenyl;
4-Phenylazophenyl, 4-(1-Napthylazo)phenyl, 4-(2-Naphthylazo)phenyl, 4-(4-Naphthylazo)phenyl, 4-(2-Pyridylazo)phenyl, 4-(3-Pyridylazo)phenyl, 4-(4-Pyridylazo)phenyl, 4-(4-Pyrimidylazo)phenyl und 4-(5-Pyrimidylazo)phenyl;

Die Herstellung der Rylenfarbstoffe I kann vorteilhaft nach dem erfindungsgemäßen mehrstufigen Verfahren, bei dem in Schritt a) ein Perylen-3,4-dicarbonsäureimid IIa regioselektiv monobromiert wird, in Schritt b1) das gebildete 9-Bromperylen-3,4-dicarbonsäureimid IIIa bzw. das entsprechende, auf bekannte Weise durch Imidierung von 4-Bromnaphthalin-1,8-dicarbonsäureanhydrid erhaltene 4-Bromnaphthalin-1,8-dicarbonsäureimid IIIb mit einem Benzophenonimin IV zu einem Ketimin umgesetzt wird, in Schritt b2) das Ketimin sauer zu dem Aminorylendicarbonsäureimid V hydrolysiert wird, welches anschließend in Schritt c) mit einem Dicarbonat VI zum Rylenfarbstoff I umgesetzt wird.

Schritt a) des erfindungsgemäßen Verfahrens, die Bromierung des Perylen-3,4-dicarbonsäureimids IIa in 9-Stellung mit elementarem Brom, wird in Gegenwart einer aliphatischen Monocarbonsäure als Lösungsmittel und gegebenenfalls von Iod als Katalysator vorgenommen.

Geeignet sind dabei insbesondere C₁-C₄-Carbonsäuren, wie Ameisensäure, Essigsäure, Propionsäure, Buttersäure und deren Mischungen.

Üblicherweise kommen 5 bis 30 kg, vorzugsweise 15 bis 25 kg, Carbonsäure, je kg (IIa) zum Einsatz.

In der Regel ist die Anwesenheit eines Halogenierungskatalysators nicht erforderlich. Will man jedoch die Bromierungsreaktion beschleunigen (etwa um den Faktor 1,5 bis 2), so empfiehlt es sich, elementares Iod, vorzugsweise in einer Menge von 1 bis 5 mol-%, bezogen auf (IIa), zuzusetzen.

Üblicherweise liegt das Molverhältnis von Brom zu (IIa) bei etwa 1 : 1 bis 5 : 1, bevorzugt bei 3 : 1 bis 4 : 1.

Die Reaktionstemperatur beträgt im allgemeinen 0 bis 50°C, vorzugsweise 15 bis 40°C.

In Abhängigkeit von der Reaktivität des Perylen-3,4-dicarbonsäureimids IIa und der An- oder Abwesenheit von Iod ist die Bromierung üblicherweise in 2 bis 12 h beendet.

Verfahrenstechnisch geht man in Schritt a) zweckmäßigerweise wie folgt vor:

Man legt das Perylen-3,4-dicarbonsäureimid (IIa) und Monocarbonsäure vor, stellt die Mischung unter Rühren in 15 bis 30 min auf die gewünschte Reaktionstemperatur ein, setzt gegebenenfalls den Katalysator und anschließend in 5 bis 10 min die gewünschte Brommenge zu und rührt die Mischung unter Lichtausschluß 2 bis 12 h bei der Reaktionstemperatur. Nach Entfernen von überschüssigem Brom mit einem kräftigen Stickstoffstrom trägt man das Reaktionsgemisch in die etwa gleiche Menge eines aliphatischen Alkohols, wie Methanol, ein, rührt über Nacht, filtriert das ausgefallene Produkt ab, wäscht es vorzugsweise mit dem gleichen Alkohol und trocknet es unter Vakuum bei etwa 120°C.

In der Regel hat das in Schritt a) erhaltene 9-Bromperylen-3,4-dicarbonsäureimid IIIa bereits einen so hohen Wertgehalt (> 98%), daß es direkt für die Folgeumsetzung verwendet werden kann.

In Schritt b1) des erfindungsgemäßen Verfahrens wird das 9-Bromperylen-3,4-dicarbonsäureimid IIIa bzw. das entsprechende 4-Bromnaphthalin-1,8-dicarbonsäureimid IIIb, das, analog zu der in Dyes and Pigments 22, Seite 191-198 (1993) beschriebenen Vorgehensweise, durch Imidierung von 4-Bromnaphthalin-1,8-dicarbonsäure erhältlich ist, in Gegenwart eines aprotischen organischen Lösungsmittels, eines Übergangsmetallkatalysatorsystems und einer Base in einer Aryl-N-Kupplungsreaktion mit einem Benzophenonimin IV zu einem Ketimin umgesetzt, das anschließend in Schritt b2) in Gegenwart eines polaren, aprotischen Lösungsmittels und einer Säure zu dem Aminorylendicarbonsäureimid V hydrolysiert wird.

Als Benzophenonimin IV eignen sich für die Ketiminbildung in Schritt b1) insbesondere Benzophenonimin, 4,4'-Dimethyl- und 4,4'-Diethylbenzophenonimin, 2,2',4,4'-Tetramethylbenzophenonimin und 4,4'-Dimethoxy- und 4,4'-Diethoxybenzophenonimin, wobei Benzophenonimin selbst bevorzugt ist.

In der Regel werden 1 bis 4 mol, vorzugsweise 1,5 bis 2,5 mol, (IV) je mol (IIIa) bzw. (IIIb) eingesetzt.

Als aprotisches organisches Lösungsmittel sind wasserfreie inerte aromatische Lösungsmittel, wie Benzol und seine Alkylierungsprodukte, z.B. Toluol und o-, m- und p-Xylol, und Mischungen dieser Verbindungen, in Schritt b1) besonders geeignet.

Die Lösungsmittelmenge beträgt üblicherweise 30 bis 200 kg, vorzugsweise 80 bis 150 kg, je kg (IIIa) bzw. (IIIb).

Als Übergangsmetallkatalysator eignen sich insbesondere Palladiumverbindungen, wobei Palladium(0)- und Palladium(II)-Komplexe, wie Tris(dibenzylidenaceton)dipalladium(0), Dichloro[1,1'-bis(diphenylphosphino)ferrocen]palladium(II) und Dichloro(1,5-cyclo-octadien)palladiurn(II), und Palladium(II)acetat als bevorzugte Beispiele zu nennen sind.

Üblicherweise wird der Übergangsmetallkatalysator in einer Menge von 0,5 bis 5 mol-%, vor allem 1 bis 3 mol-%, bezogen auf (IIIa) bzw. (IIIb), eingesetzt.

Vorzugsweise kommt zusätzlich ein Cokatalysator auf Phosphinbasis zum Einsatz. Bevorzugte Beispiele für diesen Cokatalysator sind zweizähnige Phosphinliganden, wie racemisches 2,2'-Bis(diphenylphosphino)-1,1'-binaphthyl, 1,1'-Bis(diphenylphosphino)ferrocen, 1,1'-Bis(di-o-tolylphosphino)ferrocen, 1,1'-Bis(di-p-methoxyphenylphosphino)ferrocen und 2,2'-Bis(di-o-tolylphosphino)-diphenylether, und als einzähnige Phosphinliganden wirkende Phosphine, wie Tri-o-tolylphosphin, Tri-tert.-butylphosphin und Triphenylphosphin.

Geeignete Cokatalysatormengen betragen in der Regel 1 bis 5 mol-%, vorzugsweise 1 bis 3 mol-%, bezogen auf den Übergangsmetallkatalysator.

Als Base eignen sich besonders Alkalimetallamide, vor allem Alkalimetalldi(C₃-C₆-alkyl)amide, und Alkalimetallalkoholate, vor allem die Alkalimetallsalze sekundärer und tertiärer aliphatischer (C₃-C₆-)Alkohole. Bevorzugte Bespiele für diese Basen sind: Lithiumdiisopropylamid, Natriumdiisopropylamid und Kaliumdiisopropylamid sowie Lithiumisopropanolat, Natriumisopropanolat, Kaliumisopropanolat, Lithium-tert.-butanolat, Natrium-tert.butanolat und Kalium-tert.-butanolat, wobei Natrium-tert.butanolat und Kalium-tert.-butanolat besonders bevorzugt sind.

Im allgemeinen wird eine zum Benzophenonimin IV äquimolare Menge Base eingesetzt.

Die Reaktionstemperatur liegt üblicherweise bei 50 bis 120°C, bevorzugt bei 70 bis 100°C.

Die Reaktionszeit beträgt in Abhängigkeit von der Reaktivität des bromierten Rylendicarbonsäureimids IIIa bzw. IIIb und der eingesetzten Katalysatormenge im allgemeinen 6 bis 20 h.

Verfahrenstechnisch geht man in Schritt b1) zweckmäßigerweise wie folgt vor:

Man legt Lösungsmittel, Katalysator und Cokatalysator in einer Schutzgasatmosphäre vor, setzt unter Rühren nacheinander das Bromrylendicarbonsäureimid IIIa bzw. IIIb, das Benzophenonimin IV und Base zu und erhitzt 6 bis 20 h unter Schutzgas auf die gewünschte Reaktionstemperatur. Nach Abkühlen auf Raumtemperatur filtriert man die festen Bestandteile aus dem Reaktionsgemisch ab und destilliert das Lösungsmittel unter vermindertem Druck ab.

Die Reinheit des so hergestellten Ketimins reicht im allgemeinen für die Weiterverarbeitung aus. Gegebenenfalls kann das Rohprodukt durch Umfällen aus einem Gemisch aus Chloroform oder Methylenchlorid und Petrolether oder über Säulenchromatographie an Kieselgel mit Chloroform als Eluens weiter aufgereinigt werden.

Die Hydrolyse des Ketimins in Schritt b2) wird in Gegenwart eines polaren, aprotischen Lösungsmittels vorgenommen. Bevorzugte Lösungsmittel sind aliphatische Ether, wobei acyclische Ether, wie insbesondere Di(C₂-C₄-alkyl)ether und C₂-C₃-Alkylenglykoldi-C₁-C₂-alkylether, und cyclische Ether geeignet sind. Beispielhaft seien folgende besonders bevorzugte Ether genannt: Diethylether, Dipropylether, Dibutylether, Ehtylenglykoldimethyl- und - diethylether, Tetrahydrofuran und Dioxan.

In der Regel kommen 50 bis 300 kg, vorzugsweise 70 bis 200 kg, Lösungsmittel je kg Ketimin zum Einsatz.

Zur Hydrolyse wird vorzugsweise eine anorganische Säure, wie Salzsäure, Schwefelsäure, Phosphorsäure und Salpetersäure, verwendet.

Üblicherweise werden 3 bis 6 kg einer 2 bis 4 normalen wäßrigen Lösung der Säure je kg Ketimin eingesetzt.

Die Reaktionstemperatur beträgt im allgemeinen 10 bis 50°C, vorzugsweise 20 bis 35°C.

Die Hydrolyse ist in der Regel in 0,5 bis 2 h beendet.

Verfahrenstechnisch geht man in Schritt b2) zweckmäßigerweise wie folgt vor:

Man löst das Ketimin unter Rühren im Lösungsmittel, bringt das Gemisch auf die gewünschte Reaktionstemperatur, gibt die wäßrige Säure zu und rührt 0,5 bis 2 h bei dieser Temperatur. Anschließend neutralisiert man die verbliebene Säure, z.B. mit konzentriertem wäßrigem Ammoniak, und destilliert das Lösungsmittel im Vakuum ab.

Zur weiteren Aufbereitung des Reaktionsprodukts kann man dann wie folgt verfahren:

Man suspendiert den Rückstand in einem Überschuß an verdünnter wäßriger Base (z.B. Ammoniakwasser), filtriert ab, rührt das Filtergut gegebenenfalls mehrfach in der 30 bis 50-fachen Menge an heißer wäßriger Base (etwa halbkonzentriertem wäßrigem Ammoniak) aus, filtriert erneut, wäscht mit Wasser neutral und trocknet das Filtergut im Vakuum bei 100°C. Zur Entfernung von Benzophenon und weiteren organischen Verunreinigungen extrahiert man das getrocknete Rohprodukt anschließend mit Petrolether.

Schritt c) des erfindungsgemäßen Verfahrens, die Umsetzung des Aminorylendicarbonsäureimids V mit einem Dicarbonat VI zum Rylenfarbstoff I, wird in Gegenwart eines polaren, aprotischen Lösungsmittels basenkatalysiert durchgeführt.

Besonders bevorzugte Dicarbonate VI sind Dialkylcarbonate, vor allem Di-(C₂-C₈-alkyl)dicarbonate, wie Diethyl-, Dipropyl-, Diisopropyl-, Di-n-butyl-, Di-sec.-butyl-, Di-tert.-butyl-, Di-tert.-pentyl- und Bis(2-ethylhexyl)dicarbonat, Dicycloalkyldicarbonate, vor allem Di-(C₅-C₈-cycloalkyl)dicarbonate, wie Dicyclopentyl-, Dicyclohexyl- und Dicycloheptyldicarbonat, Dicycloalkylalkyldicarbonate, wie Bis(1- und 2-cyclohexylethyl)- und Bis(1,- 2- und 3-cyclohexylpropyl)dicarbonat, Diaralkyldicarbonate, vor allem Diphenyl-C₁-C₄-alkyldicarbonate, wie Dibenzyl-, Bis(1- und 2-phenylethyl)- und Bis(1-, 2- und 3-phenylpropyl)dicarbonat, und Diphenyldicycloalkyl-C₁-C₄-alkyldicarbonate, wie Bis(1- und 2-cyclohexyl-2-phenyl)-, Bis(1-, 2- und 3-cyclohexyl-2-phenyl)- und Bis(1-, 2- und 3-cyclohexyl-3-phenyl)dicarbonat.

In der Regel werden 2 bis 5 mol, vorzugsweise 3 bis 4 mol, (VI) je mol (V) eingesetzt.

Als polares, aprotisches Lösungsmittel eignen sich insbesondere die für Schritt b2) genannten Ether, die zweckmäßigerweise in wasserfreier (getrockneter) Form zur Anwendung kommen.

Die Lösungsmittelmenge beträgt üblicherweise 50 bis 300 kg, vorzugsweise 80 bis 200 kg, je kg (V).

Als Base sind vor allem Stickstoffbasen, insbesondere tertiäre aliphatische Amine, bevorzugt Tri-(C₁-C₄-alkyl)amine geeignet, deren Alkylreste gleich oder verschieden sein können und die vorzugsweise in Kombination mit dialkylaminosubstituierten Pyridinen verwendet werden. Ganz besonders bevorzugt werden Kombinationen von Tri-(C₂-C₄-alkyl)aminen, wie Triethyl-, Diisopropylethyl- und Tributylamin, mit 4-(N,N-Dimethylamino)pyridin im Molverhältnis von 4 : 1 bis 1 : 1, insbesondere von etwa 2 : 1, eingesetzt.

Im allgemeinen kommen 5 bis 20 mol-%, vorzugsweise etwa 10 mol-%, Base, bezogen auf (VI), zum Einsatz.

Die Reaktionstemperatur liegt in der Regel bei 20 bis 70°C, bevorzugt bei 35 bis 50°C.

Die Reaktionszeit beträgt üblicherweise 2 bis 12 h.

Verfahrenstechnisch geht man in Schritt c) zweckmäßigerweise wie folgt vor:

Man legt Lösungsmittel, das Aminorylendicarbonsäureimid V und Base in einer Schutzgasatmosphäre vor, gibt das Dicarbonat VI zu und rührt die Mischung 2 bis 12 h unter Schutzgas bei der gewünschten Reaktionstemperatur. Zur Aufarbeitung auf den Rylenfarbstoff I destilliert man anschließend etwa 70 bis 80 Vol.-% des Lösungsmittels im Vakuum ab, gibt langsam die 2 bis 4-fache Menge eines aliphatischen Alkohols, z.B. Methanol, zu und vervollständigt die Ausfällung des Rylenfarbstoffs I durch Kühlung auf 3 bis 6°C, filtriert den Farbstoff I ab und trocknet bei 100°C im Vakuum.

Die Reinheit der erhaltenen Rylenfarbstoffe I beträgt in der Regel > 97% und ist im allgemeinen für die Anwendung ausreichend. Für besondere Anforderungen ist eine Erhöhung der Reinheit durch Rekristallisation aus einem Halogenkohlenwasserstoff, wie Methylenchlorid und Chloroform, oder einem aromatischen Lösungsmittel, wie Benzol, Toluol und Xylol, oder durch Säulenchromatographie an Kieselgel mit Chloroform als Eluens möglich.

Das erfindungsgemäße Verfahren ermöglicht die Herstellung der Rylenfarbstoffe I und ihrer Zwischenprodukte auf vorteilhafte, wirtschaftliche Weise. Der Wertgehalt der in den einzelnen Verfahrensschritten erhaltenen Produkte liegt ohne weitere Reinigung in der Regel bei > 95%, die Ausbeute aller Verfahrensschritte, jeweils bezogen auf das eingesetzte Rylendicarbonsäureimidderivat, beträgt im allgemeinen > 60% für Perylendicarbonsäureimidderivate und > 40% für Naphthalindicarbonsäureimidderivate.

Die erfindungsgemäßen Rylenfarbstoffe I eignen sich hervorragend zur homogenen Einfärbung von hochmolekularen organischen und anorganischen Materialien, insbesondere z.B. von Kunststoffen, vor allem thermoplastischen Kunststoffen, Lacken und Druckfarben sowie oxidischen Schichtsystemen.

Eine besonders vorteilhafte Eigenschaft der erfindungsgemäßen Rylenfarbstoffe I ist ihre Thermochromie, d.h. die irreversible Umwandlung der Farbstoffe von einem molekularen Individuum mit einer Primärfarbe A in ein strukturell unterschiedliches Individuum mit einer Sekundärfarbe B. Der thermochrome Effekt wird durch Erwärmen des eingefärbten Materials auf Temperaturen oberhalb der Umwandlungstemperatur des Rylenfarbstoffs I induziert. Die Primär- und/oder Sekundärfarbe des eingefärbten Materials kann zusätzlich in einfacher Weise variiert werden, indem die erfindungsgemäßen Rylenfarbstoffe I in Mischung untereinander und/oder mit herkömmlichen Pigmenten und Farbstoffen eingesetzt werden.

Die Thermochromie der erfindungsgemäßen Rylenfarbstoffe I kann außerdem vorteilhaft zur Herstellung lasermarkierbarer bzw. -beschriftbarer Einfärbungen genutzt werden. Durch geschickte Wahl des Substituenten R' kann die Umwandlungstemperatur der Rylenfarbstoffe I besonders für diesen Anwendungszweck eingestellt werden, was nicht zu erwarten war. So liegen die Umwandlungstemperaturen von erfindungsgemäßen Rylenfarbstoffen der Formel I, in der R' primäres oder sekundäres Alkyl oder Aralkyl bedeutet, im allgemeinen bei > 280°C. Diese Rylenfarbstoffe I können ohne Veränderung der Primärfarbe auf herkömmliche Weise (z.B. durch Extrusion oder Spritzguß) in die klassischen thermoplastischen Kunststoffe (z.B. Polystyrol, Poly(acrylonitril-butadien-styrol), Poly(styrol-acrylonitril), Polycarbonat, Polymethylmethacrylat) eingearbeitet und zur technischen Lasermarkierung bzw. -beschriftung verwendet werden.

Zur Herstellung einer lasermarkierbaren bzw. -beschriftbaren Einfärbung werden die erfindungsgemäßen Rylenfarbstoffe I (bzw. ihre Mischungen untereinander und/oder mit anderen Farbmitteln) in Kombination mit einem oder mehreren transparenten oder transluzenten, organischen oder anorganischen (N)IR-Absorbern mit insbesondere neutraler oder im Sichtbaren nur schwach ausgebildeter Eigenfarbe eingesetzt, welche die eingestrahlte (N)IR-Laserenergie in die für die thermochrome Umwandlung notwendige thermische Energie umwandeln.

Hierfür können gängige, kommerziell erhältliche (N)IR-Absorber, z.B. solche aus den Klassen der Methine, Azamethine, Übergangsmetall-Dithiolene, Quadratsäurederivate, Phthalocyanine, Naphthalocyanine, Amidinium- und Iminiumsalze sowie insbesondere Quaterrylenderivate verwendet werden. Für einen Einsatz zusammen mit Halbleiterlasern sind dabei Absorber mit einem Absorptionsmaximum bei 780 bis 850 nm und für einen Einsatz zusammen mit gängigen Nd-YAG-Lasern Absorber mit einem Absorptionsmaximum bei etwa 1064 nm, die jeweils eine Gramm-Absorptivität am Absorptionsmaximum von mindestens 50 aufweisen, besonders bevorzugt.

### Beispiele

### A) Herstellung von erfindungsgemäßen Rylenfarbstoffen der Formel I

### a) Herstellung von 9-Bromperylen-3,4-dicarbonsäureimiden der Formel IIIa

### Beispiele 1 bis 4

x₁ g (0,1 mol) Perylen-3,4-dicarbonsäureimid IIa wurden 30 min in a₁ l Eisessig suspendiert. Nach Zugabe von 1 g (4 mmol) Iod und 64 g (0,4 mol) Brom wurde die Mischung unter Lichtausschluß t₁ h bei T₁°C gerührt.

Das Reaktionsgemisch wurde anschließend durch Hindurchleiten eines kräftigen Stickstoffstroms von überschüssigem Brom befreit, dann mit 1 l Methanol verdünnt und über Nacht bei Raumtemperatur gerührt.

Das ausgefallene Produkt wurde abfiltriert, zunächst mit 1,5 l Methanol und dann mit Wasser bis zum neutralen Ablauf gewaschen und bei 120°C im Vakuum getrocknet.

Weitere Einzelheiten zu diesen Versuchen sowie deren Ergebnisse sind in Tabelle 1 zusammengestellt.

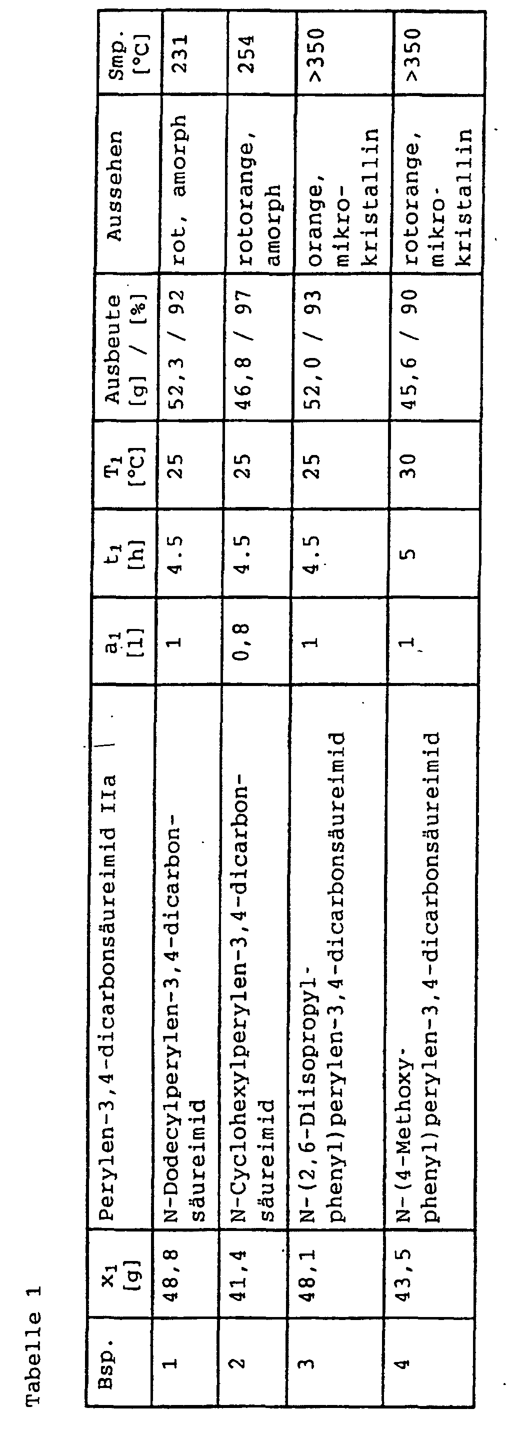

Analytische Daten zu Beispiel 1:
   9-Brom-N-dodecylperylen-3,4-dicarbonsäureimid:
   Elementaranalyse (Gew.-% ber./gef.):
   C: 71,8/71,6; H: 6,0/6,0; N: 2,5/2,4; O: 5,6/5,7;
   Br: 14,0/14,2;
   Masse (FD, 8kV): m/z = 569,2 (M⁺, 100 %);
   1H-NMR (500 MHz, C₂D₂Cl₄, 135°C): δ = 8,5-8,6 (m, 2H), 8,3-8,5 (m, 4H), 8,15 (d, 1H), 7,90 (d, 1H), 7,71 (t, 1H), 4,23 (t, 2H), 1,84 (m, 2H), 1,48 (m, 2H), 1,35 (bs, 16H), 0,94 (t, 3H) ppm;
   IR (KBr): ν = 1694 (s, C=O), 1651 (s, C=O) cm⁻¹;
   UV/VIS (CHCl₃): λₘₐₓ (ε) = 480 (34689), 504 (32084) nm.
Analytische Daten zu Beispiel 2:
   9-Brom-N-cyclohexylperylen-3,4-dicarbonsäureimid:
   Elementaranalyse (Gew.-% ber./gef.):
   C: 69,7/69,6; H: 4,2/4,2; N: 2,9/2,9; O: 6,6/6,6;
   Br: 16,6/16,7;
   Masse (FD, 8kV): m/z = 483,1 (M⁺, 100 %);
   IR (KBr): ν = 1692 (s, C=O), 1652 (s, C=O) cm⁻¹;
   UV/VIS (CHCl₃): λₘₐₓ (ε) = 482 (35807), 505 (33991) nm.
Analytische Daten zu Beispiel 3:
   9-Brom-N-(2,6-diisopropylphenyl)perylen-3,4-dicarbonsäureimid:
   Elementaranalyse (Gew.-% ber./gef.):
   C: 72,9/73,0; H: 4,7/4,7; N: 2,5/2,5; O: 5,7/5,8;
   Br: 14,3/14,1;
   Masse (FD, 8kV): m/z = 561,1 (M⁺, 100 %);
   1H-NMR (300 MHz, CDCl₃): δ = 8,64 (d, 1H), 8,62 (d, 1H), 8,45 (d, 1H), 8,42 (d, 1H), 8,37 (d, 1H), 8,27 (d, 1H), 8,20 (d, 1H), 7,87 (d, 1H), 7,69 (t, 1H), 7,47 (dd, 1H), 7,33 (d, 2H), 2,77 (m, 2H) , 1,18 (d, 12H) ppm;
   IR (KBr): ν = 1695 (s, C=O), 1653 (s, C=O) cm⁻¹;
   UV/VIS (CHCl₃): λₘₐₓ (ε) = 484 (34762), 509 (35319) nm.
Analytische Daten zu Beispiel 4:
   9-Brom-N-(4-methoxyphenyl)perylen-3,4-dicarbonsäureimid:
   Elementaranalyse (Gew.-% ber./gef.):
   C: 68,8/68,9; H: 3.2/3,2; N: 2,8/2,8; O: 9,5/9,6;
   Br: 15,8/15,6;
   Masse (FD, 8kV) : m/z = 507 (M⁺, 100 %);
   IR (KBr): ν = 1698 (s, C=O), 1651 (s, C=O) cm⁻¹;
   UV/VIS (CHCl₃): λₘₐₓ (ε) = 486 (36103), 510 (36888) nm.

### b) Herstellung von Aminorylendicarbonsäureimiden der Formel V

### Beispiele 5 bis 20

### Teilschritt I: Herstellung der Ketimine

### Beispiele 5 bis 12

Eine unter Schutzgas gerührte Lösung von k mmol des Übergangsmetallkatalysators Tris(benzylidenaceton)dipalladium(0) und c µmol des Cokatalysators 2,2'-Bis(diphenylphosphino)-1,1'-binaphthyl (Racemat) in a₂ l wasserfreiem Toluol wurde nach Zugabe von x₂ g (18 mmol) des Monobromrylendicarbonsäureimids III, 6,52 g (36 mmol) Benzophenonimin und 3,46 g Natrium-tert.-butanolat t₂ h auf T₂°C erhitzt.

Nach Abkühlen auf Raumtemperatur, Abfiltrieren der unlöslichen Bestandteile und Abdestillieren des Lösungsmittels unter vermindertem Druck wurde das Rohprodukt in möglichst wenig Chloroform unter leichtem Erwärmen gelöst. Nach Filtration wurde das Produkt durch vorsichtigen Zusatz der zehnfachen Menge an Petrolether (Siedebereich 60 - 90°C) wieder ausgefällt, abfiltriert und bei 100°C im Vakuum getrocknet.

Weitere Einzelheiten zu diesen Versuchen sowie deren Ergebnisse sind in Tabelle 2 zusammengestellt.

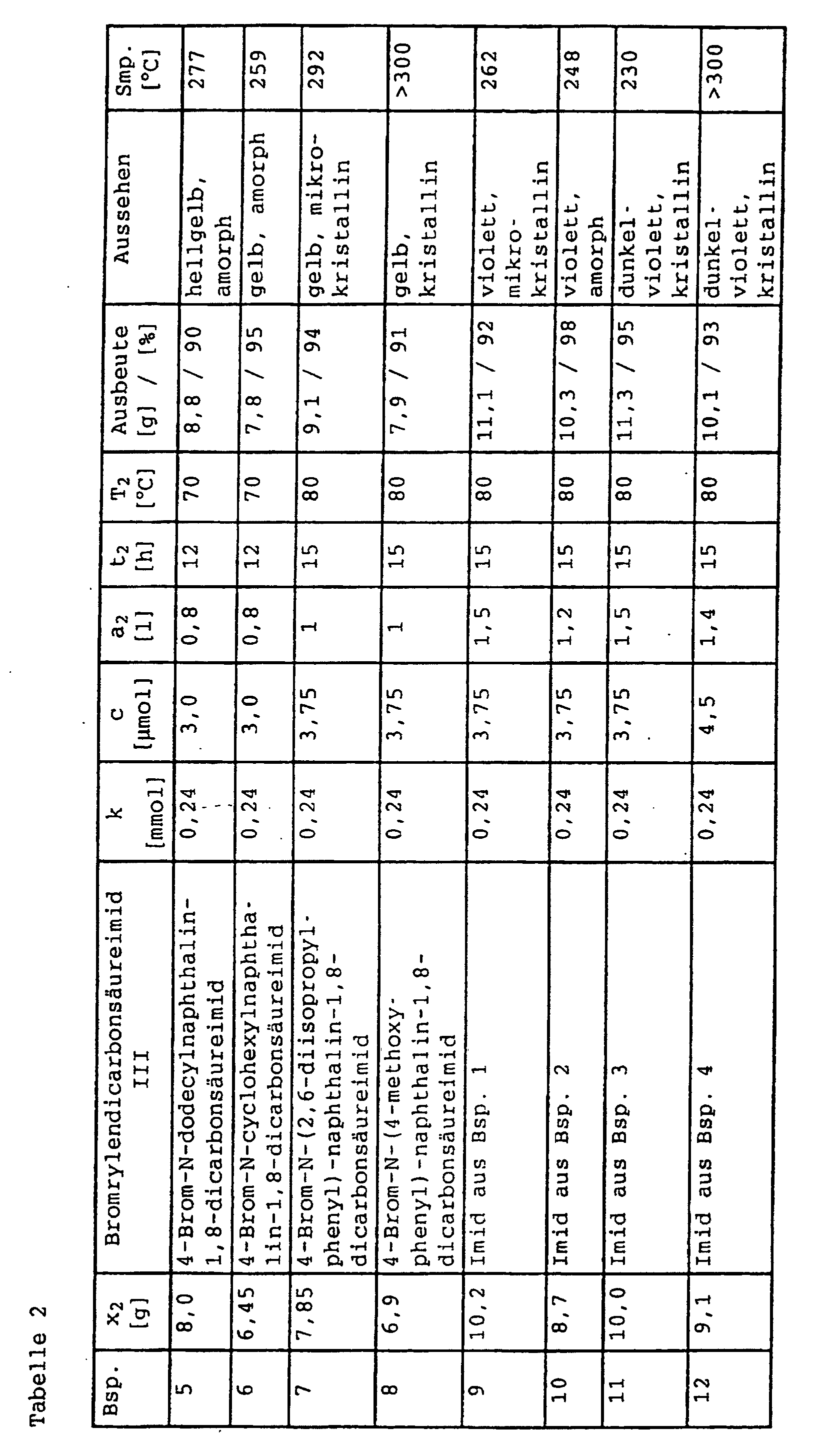

Analytische Daten zu Beispiel 5:
   4-(Diphenylmethylenimino)-N-dodecylnaphthalin-1,8-dicarbonsäureimid:
   Elementaranalyse (Gew.-% ber./gef.):
   C: 81,6/81,8; H: 7,4/7,3; N: 5,1/5,1; O: 5,9/5,8;
   Masse (FD, 8kV): m/z = 544,2 (M⁺, 100 %).
Analytische Daten zu Beispiel 6:
   4-(Diphenylmethylenimino)-N-cyclohexylnaphthalin-1,8-dicarbonsäureimid:
   Elementaranalyse (Gew.-% ber./gef.):
   C: 81,2/81,1; H: 5,7/5,7; N: 6,1/6,1; O: 7,0/7,1;
   Masse (FD, 8kV): m/z = 458,2 (M⁺, 100 %).
Analytische Daten zu Beispiel 7:
   4-(Diphenylmethylenimino)-N-(2,6-diisopropylphenyl)-naphthalin-1,8-dicarbonsäureimid:
   Elementaranalyse (Gew.-% ber./gef.):
   C: 82,8/82,6; H: 6,0/6,1; N: 5,2/5,2; O: 6,0/6,1;
   Masse (FD, 8kV): m/z = 536.2 (M⁺, 100 %);
   1H-NMR (300 MHz, C₂D₂Cl₄, 120°C): δ = 8,57 (d, 1H), 8,40 (d, 1H), 8,30 (d, 1H), 7,68 (dd, 1H), 7,50 (m, 4H), 7,36 (m, 7H), 7,23 (d, 2H), 6,75 (d, 1H), 2,70 (m, 2H), 1,11 (d, 12H) ppm;
   IR (KBr): ν = 1774 (s, C=O), 1735 (s, C=O) cm⁻¹;
   UV/VIS (CHCl₃): λₘₐₓ (ε) = 389 (19640) nm.
Analytische Daten zu Beispiel 8:
   4-(Diphenylmethylenimino)-N-(4-methoxyphenyl)naphthalin-1,8-dicarbonsäureimid:
   Elementaranalyse (Gew.-% ber./gef.):
   C: 79,65/79,8; H: 4,6/4,6; N: 5,8/5,7; O: 9,95/9,9;
   Masse (FD, 8kV): m/z = 482,2 (M⁺, 100 %).
Analytische Daten zu Beispiel 9:
   9-(Diphenylmethylenimino)-N-dodecylperylen-3,4-dicarbonsäureimid:
   Elementaranalyse (Gew.-% ber./gef.):
   C: 84,4/84,2; H: 6,6/ 6,7; N: 4,2/4,2; O: 4,8/4,9;
   Masse (FD, 8kV): m/z = 668,3 (M⁺, 100 %).
Analytische Daten zu Beispiel 10:
   9-(Diphenylmethylenimino)-N-cyclohexylperylen-3,4-dicarbonsäureimid:
   Elementaranalyse (Gew.-% ber./gef.):
   C: 84,5/84,1; H: 5,2/5,3; N: 4,8/4,9; 0: 5,5/5,7;
   Masse (FD, 8kV): m/z = 582,2 (M⁺, 100 %).
Analytische Daten zu Beispiel 11:
   9-(Diphenylmethylenimino)-N-(2,6-diisopropylphenyl)-perylen-3,4-dicarbonsäureimid:
   Elementaranalyse (Gew.-% ber./gef.):
   C: 85,4/85,1; H: 5,5/5,6; N: 4,25/4,2; O: 4,85/5,0;
   Masse (FD, 8kV): m/z = 660.3 (M⁺, 100 %);
   1H-NMR (500 MHz, C₂D₂Cl₄, 140°C): δ = 8,63 (d, 1H), 8,57 (d, 1H), 8,50 (d, 1H), 8,44 (d, 1H), 8,26 (d, 1H), 8,22 (d, 1H), 8,20 (c, 1H), 7,66 (dd, 1H), 7,59 (m, 4H), 7,46 (t, 1H), 7,43 (m, 6H), 7,32 (d, 2H), 6,72 (d, 1H), 2,81 (m, 2H), 1,22 (d, 12H) ppm;
   IR (KBr): ν = 1696 (s, C=O), 1657 (s, C=O) cm⁻¹;
   UV/VIS (NMP): λₘₐₓ (ε) = 535 (40480) nm.
Analytische Daten zu Beispiel 12:
   9-(Diphenylmethylenimino)-N-(4-methoxyphenyl)perylen-3,4-dicarbonsäureimid:
   Elementaranalyse (Gew.-% ber./gef.):
   C: 83,15/83,0; H: 4,3/4,3; N: 4,2/4,2; O: 4,8/4,9;
   Masse (FD, 8kV): m/z = 606,2 (M⁺, 100 %).

Teilschritt II: Hydrolyse der Ketimine zu den Aminorylendicarbonsäureimiden V

### Beispiele 13 bis 20

Eine Lösung von 10 g (x₃ mmol) des Ketimins aus Beispiel 5 bis 12 in a₃ l Tetrahydrofuran wurde nach Zugabe von 50 ml 2-molarer wäßriger Salzsäure t₃ h bei T₃°C gerührt.

Nach Neutralisation des Reaktionsgemischs mit konzentriertem Ammoniak und Abdestillieren des Lösungsmittels im Vakuum wurde der Rückstand zur Entfernung von anorganischen Verunreinigungen in einer Mischung aus 1 l Wasser und 50 ml konzentriertem Ammoniak suspendiert, abfiltriert, erneut zweimal mit zwischengeschalteter Filtration in jeweils 1 l heißem 20 gew.%-igem wäßrigen Ammoniak suspendiert und dann filtriert. Durch Heißextraktion mit Petrolether (Siedebereich 60-90°C) wurde das Rohprodukt anschließend von Benzophenon und anderen organischen Verunreinigungen befreit und dann bei 100°C im Vakuum getrocknet.

Weitere Einzelheiten zu diesen Versuchen sowie deren Ergebnisse sind in Tabelle 3 zusammengestellt.

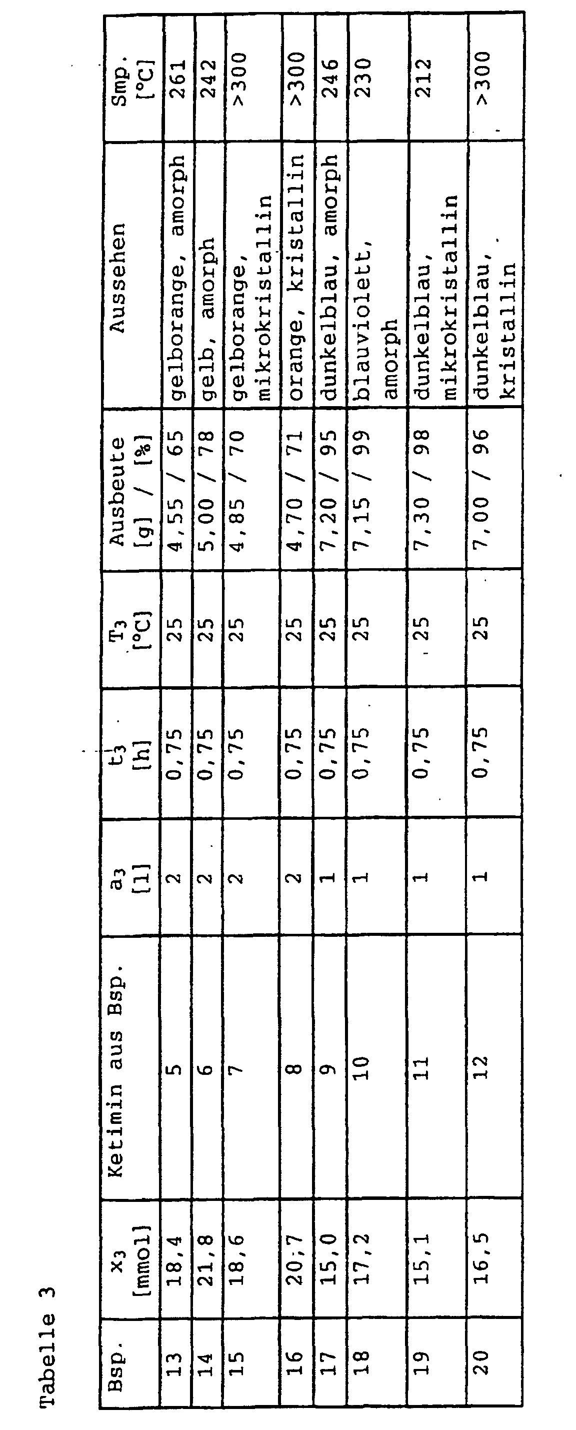

Analytische Daten zu Beispiel 13:
   4-Amino-N-dodecylnaphthalin-1,8-dicarbonsäureimid:
   Elementaranalyse (Gew.-% ber./gef.):
   C: 75,75/75,4; H: 8,5/8,6; N: 7,35/7,5; O: 8,4/8,5;
   Masse (FD, 8kV): m/z = 380,2 (M⁺, 100 %).
Analytische Daten zu Beispiel 14:
   4-Amino-N-cyclohexylnaphthalin-1,8-dicarbonsäureimid:
   Elementaranalyse (Gew.-% ber./gef.):
   C: 73,45/73,1; H: 6,15/6,2; N: 9,5/9,6; O: 10,9/11,1;
   Masse (FD, 8kV): m/z = 294,1 (M⁺, 100 %).
Analytische Daten zu Beispiel 15:
   4-Amino-N-(2,6-diisopropylphenyl)naphthalin-1,8-dicarbonsäureimid:
   Elementaranalyse (Gew.-% ber./gef.):
   C: 77,4/77,1; H: 6,5/6,6; N: 7,5/7,5; O: 8,6/8,8;
   Masse (FD, 8kV): m/z = 372,2 (M⁺, 100 %);
   1H-NMR (300 MHz, DMSO-d₆, 25°C): δ = 8,69 (d, 1H), 8,46 (d, 1H), 8,23 (d, 1H), 7,68 (dd, 1H), 7,58 (s, 2H), 7,39 (t, 1H), 7,26 (d, 2H), 6,89 (d, 1H), 2,57 (m, 2H), 1,02 (d, 12H) ppm;
   IR (KBr): ν = 1678 (m, C=O), 1635 (m, C=O) cm⁻¹;
   UV/VIS (CHCl₃): λₘₐₓ (ε) = 407 (11140) nm.
Analytische Daten zu Beispiel 16:
   4-Amino-N-(4-methoxyphenyl)naphthalin-1,8-dicarbonsäureimid:
   Elementaranalyse (Gew.-% ber./gef.):
   C: 71,7/71,4; H: 4,4/4,5; N: 8,8/8,8; O: 15,1/15,3;
   Masse (FD, 8kV): m/z = 318,1 (M⁺, 100 %).
Analytische Daten zu Beispiel 17:
   9-Amino-N-dodecylperylen-3,4-dicarbonsäureimid:
   Elementaranalyse (Gew.-% ber./gef.):
   C: 80,9/81,2; H: 7,2/7,1; N: 5,55/5,5; O: 6,35/6,2;
   Masse (FD, 8kV): m/z = 504,3 (M⁺, 100 %).
Analytische Daten zu Beispiel 18:
   9-Amino-N-cyclohexylperylen-3,4-dicarbonsäureimid:
   Elementaranalyse (Gew.-% ber./gef.):
   C: 80,35/80,6; H: 5,3/5,3; N: 6,7/6,6; O: 7,65/7,5;
   Masse (FD, 8kV): m/z = 418,2 (M⁺, 100 %).
Analytische Daten zu Beispiel 19:
   9-Amino-N-(2,6-diisopropylphenyl)perylen-3,4-dicarbonsäureimid:
   Elementaranalyse (Gew.-% ber./gef.):
   C: 82,2/81,9; H: 5,7/5,8; N: 5,65/5,55; O: 6,45/6,75;
   Masse (FD, 8kV): m/z = 496,2 (M⁺, 100 %);
   1H-NMR (500 MHz, DMSO-d₆, 25°C): δ = 8,75 (d, 1H), 8,59 (d, 1H), 8,49 (d, 1H), 8,43 (d, 1H), 8,38 (d, 1H), 8,36 (d, 1H), 8,29 (d, 1H), 7,64 (dd, 1H), 7,42 (t, 1H), 7,31 (d, 2H), 7,14 (s, 2H), 6,91 (d, 1H), 2,62 (m, 2H), 1,08 (d, 12H) ppm;
   IR (KBr): ν = 1686 (s, C=O), 1641 (s, C=O) cm⁻¹;
   UV/VIS (CHCl₃): λₘₐₓ (ε) = 561 (29070) nm.
Analytische Daten zu Beispiel 20:
   9-Amino-N-(4-methoxyphenyl)perylen-3,4-dicarbonsäureimid:
   Elementaranalyse (Gew.-% ber./gef.):
   C: 78,7/78,5; H: 4,1/4,1; N: 6,35/6,4; O: 10,85/11,0;
   Masse (FD, 8kV): m/z = 442,1 (M⁺, 100 %).

### c) Herstellung der Rylenfarbstoffe I

### Beispiele 21 bis 32

Eine unter Schutzgas gerührte Lösung von 49 mg (0,4 mmol) 4-(N,N-Dimethylamino)pyridin, 408 mg (0,8 mmol) Triethylamin und x₄ g (2,02 mmol) des Aminorylendicarbonsäureimids aus Beispiel 13 bis 20 in 100 ml wasserfreiem Tetrahydrofuran (Beispiele 21 bis 31) bzw. Dioxan (Beispiel 32) wurde nach Zugabe von y g (8 mmol) des Dicarbonats VI t₄ h auf T₄°C erhitzt.

Nach Abdestillieren von 80 Vol.-% des Lösungsmittels unter Vakuum wurde die Ausfällung des Produkts durch langsamen Zusatz von 50 ml Methanol und Kühlung auf 3 bis 6°C vervollständigt. Das ausgefallene Produkt wurde abfiltriert, mit Methanol gewaschen und bei 100°C im Vakuum getrocknet.

Die Schmelzpunkte aller erhaltenen Rylenfarbstoffe I lag oberhalb der Temperatur der thermischen Umwandlung (Abspaltung von CO₂ und Alken bzw. Aralken).

Weitere Einzelheiten zu diesen Versuchen sowie deren Ergebnisse sind in Tabelle 4 zusammengestellt.

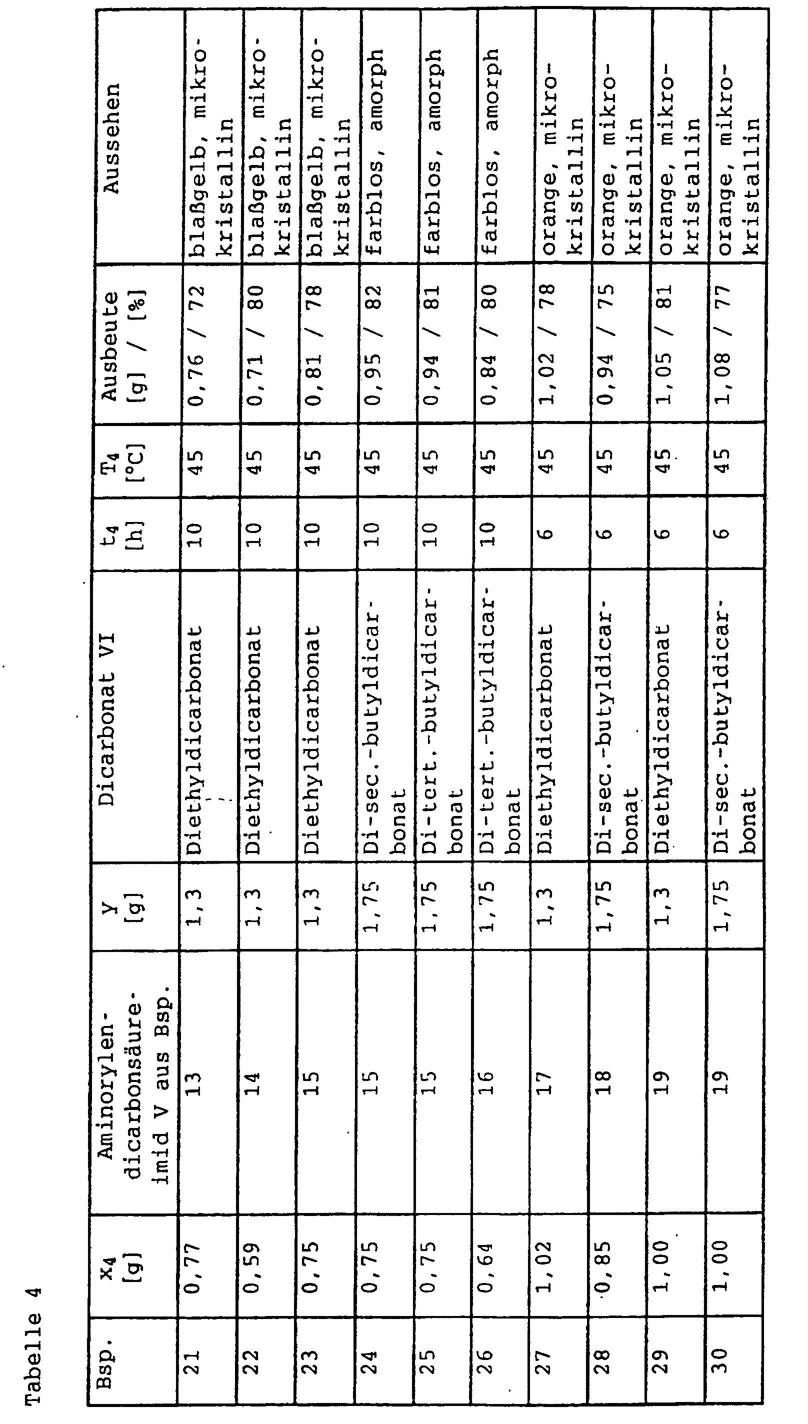

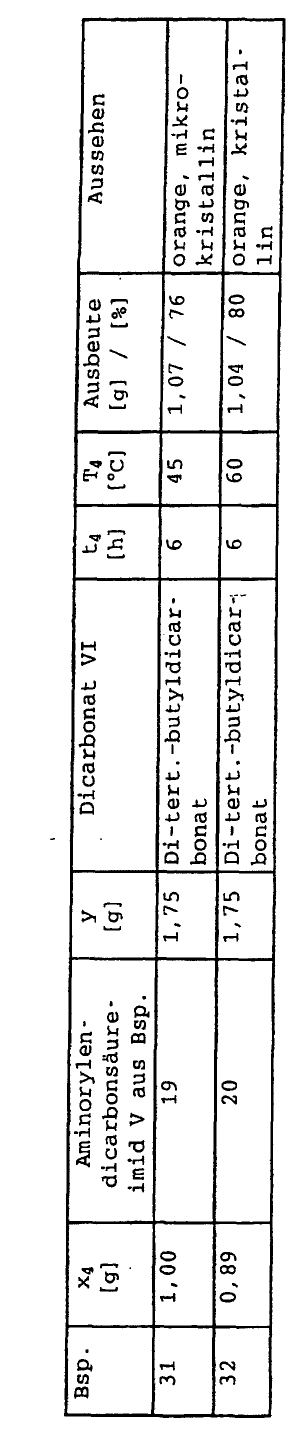

Analytische Daten zu Beispiel 21:
   4-(Diethoxycarbonyl)amino-N-dodecylnaphthalin-1,8-dicarbonsäureimid:
   Elementaranalyse (Gew.-% ber./gef.):
   C: 68,7/68,4; H: 7,7/7,7; N: 5,35/5,4; O: 18,3/18,5;
   Masse (MALDI-TOF): m/z = 524,5 (M⁺, 100 %);
   IR (KBr): ν = 1627 (s), 1564 (s), 1543 (s) 1508 (s) cm⁻¹;
   UV/VIS (CHCl₃): λₘₐₓ (ε) = 345 (16 541), 360 (14001) nm.
Analytische Daten zu Beispiel 22:
   4-(Diethoxycarbonyl)amino-N-cyclohexylnaphthalin-1,8-dicarbonsäureimid:
   Elementaranalyse (Gew.-% ber./gef.):
   C: 65,75/65,5; H: 6,0/6,0; N: 6,4/6,5; O: 21,9/22,1;
   Masse (MALDI-TOF): m/z = 438,4 (M⁺, 100 %);
   IR (KBr): ν = 1628 (s), 1564 (s), 1542 (s) 1507 (s) cm⁻¹;
   UV/VIS (CHCl₃): λₘₐₓ (ε) = 346 (16 900), 358 (14807) nm.
Analytische Daten zu Beispiel 23:
   4-(Diethoxycarbonyl)amino-N-(2,6-diisopropylphenyl)-naphthalin-1,8-dicarbonsäureimid:
   Elementaranalyse (Gew.-% ber./gef.):
   C: 69,75/69,5; H: 6,25/6,3; N: 5,4/5,4; O: 18,6/18,8;
   Masse (MALDI-TOF): m/z = 516,5 (M⁺, 100 %);
   1H-NMR (300 MHz, C₂D₂Cl₄, 25°C): δ = 8,59 (d, 1H), 8,56 (d, 1H), 8,17 (d, 1H), 7,79 (dd, 1H), 7,61 (d, 1H), 7,39 (t, 1H), 7,26 (d, 2H), 4,14 (q, 4H), 2,60.(m, 2H), 1,07 (m, 18H) ppm;
   IR (KBr): ν = 1624 (s), 1562 (s), 1544 (s) 1510 (s) cm⁻¹;
   UV/VIS (CHCl₃): λₘₐₓ (ε) = 342 (15760), 358 (13411) nm.
Analytische Daten zu Beispiel 24:
   4-(Di-sec.-butoxycarbonyl)amino-N-(2,6-diisopropylphenyl)naphthalin-1,8-dicarbonsäureimid (Isomerenmischung):
   Elementaranalyse (Gew.-% ber./ gef.):
   C: 71,3/70,9; H: 7,05/7,15; N: 4,9/5,0; O: 16,75/16,95;
   Masse (MALDI-TOF): m/z = 572,6 (M⁺, 100 %);
   1H-NMR (300 MHz, C₂D₂Cl₄, 25°C): δ = 8,58 (d, 1H), 8,56 (d, 1H), 8,15 (d, 1H), 7,80 (dd, 1H), 7,61 (d, 1H), 7,40 (t, 1H), 7,24 (d, 2H), 4,76 (m, 2H), 2,63 (m, 2H), 1,40 (m, 2H), 1,33 (m, 2H), 1,12 (d, 3H), 1,09 (d, 12H), 1,05 (d, 3H) ppm;
   IR (KBr): ν = 1623 (s), 1561 (s), 1544 (s) 1508 (s) cm⁻¹;
   UV/VIS (CHCl₃): λₘₐₓ (ε) = 340 (15511), 354 (13300) nm.
Analytische Daten zu Beispiel 25:
   4-(Di-tert.-butoxycarbonyl)amino-N-(2,6-diisopropylphenyl)naphthalin-1,8-dicarbonsäureimid:
   Elementaranalyse (Gew.-% ber./ gef.):
   C: 71,3/71,1; H: 7,05/7,1; N: 4,9/4,9; O: 16,75/16,9;
   Masse (MALDI-TOF): m/z = 572,7 (M⁺, 100 %);
   1H-NMR (300 MHz, C₂D₂Cl₄, 25°C): δ = 8,58 (d, 1H), 8,57 (d, 1H), 8,15 (d, 1H), 7,79 (dd, 1H), 7,62 (d, 1H), 7,39 (t, 1H), 7,24 (d, 2H), 2,62 (m, 2H), 1,39 (s, 18H), 1,05 (d, 12H) ppm;
   IR (KBr): ν = 1623 (s), 1560 (s), 1542 (s) 1509 (s) cm⁻¹;
   UV/VIS (CHCl₃): λₘₐₓ (ε) = 340 (15420), 352 (13260) nm.
Analytische Daten zu Beispiel 26:
   4-(Di-tert.-butoxycarbonyl)amino-N-(4-methoxyphenyl)-naphthalin-1,8-dicarbonsäureimid:
   Elementaranalyse (Gew.-% ber./gef.):
   C: 67,2/66,9; H: 5,8/5,9; N: 5,4/5,4; O: 21,6/21,8;
   Masse (MALDI-TOF): m/z = 518,5 (M⁺, 100 %);
   IR (KBr): v = 1625 (s), 1558 (s), 1540 (s), 1511 (s) cm⁻¹;
   UV/VIS (CHCl₃): λₘₐₓ (ε) = 341 (16005), 355 (13360) nm.
Analytische Daten zu Beispiel 27:
   9-(Diethoxycarbonyl)amino-N-dodecylperylen-3,4-dicarbonsäureimid:
   Elementaranalyse (Gew.-% ber./gef.):
   C: 74,05/73,8; H: 6,85/6,9; N: 4,3/4,3; O: 14,8/15,0;
   Masse (MALDI-TOF): m/z = 648,5 (M⁺, 100 %);
   IR (KBr): ν = 1700 (s, C=O), 1666 (s, C=O), 1501 (s) cm⁻¹;
   UV/VIS (CHCl₃): λₘₐₓ (ε) = 484 (35940), 510 (37010) nm.
Analytische Daten zu Beispiel 28:
   9-(Di-sec.-butoxycarbonyl)amino-N-cyclohexylperylen-3,4-dicarbonsäureimid:
   Elementaranalyse (Gew.-% ber./gef.):
   C: 73,8/73,5; H: 6,2/6,3; N: 4,5/4,55; O: 15,5/15,65;
   Masse (MALDI-TOF): m/z = 618,4 (M⁺, 100 %);
   IR (KBr): ν = 1698 (s, C=O), 1667 (s, C=O) cm⁻¹;
   UV/VIS (CHCl₃): λₘₐₓ (ε) = 485 (36170), 511 (37030) nm.
Analytische Daten zu Beispiel 29:
   9-(Diethoxycarbonyl)amino-N-(2,6-diisopropylphenyl)perylen-3,4-dicarbonsäureimid:
   Elementaranalyse (Gew.-% ber./gef.):
   C: 75,0/74,8; H: 5,65/5,65; N: 4,35/4,25; O: 15,0/15,3;
   Masse (MALDI-TOF): m/z = 640,3 (M⁺, 100 %);
   1H-NMR (500 MHz, C₂D₂Cl₄, 25°C): δ = 8,52 (d, 1H), 8,51 (d, 1H), 8,39 (m, 3H), 8,35 (d, 1H), 7,78 (d, 1H), 7,64 (dd, 1H), 7,46 (d, 1H), 7,39 (t, 1H), 7,25 (d, 2H), 4,16 (q, 4H), 2,65 (m, 2H), 1,09 (m, 18H) ppm;
   IR (KBr): ν = 1702 (s, C=O), 1664 (s, C=O), 1502 (s) cm⁻¹;
   UV/VIS (CHCl₃): λₘₐₓ (ε) = 481 (36780), 507 (37620) nm.
Analytische Daten zu Beispiel 30:
   9-(Di-sec.-butoxycarbonyl)amino-N-(2,6-diisopropylphenyl)perylen-3,4-dicarbonsäureimid:
   Elementaranalyse (Gew.-% ber./gef.):
   C: 75,85/75,5; H: 6,35/6,4; N: 4,0/4,0; O: 13,8/14,1;
   Masse (MALDI-TOF): m/z = 696,3 (M⁺, 100 %);
   1H-NMR (500 MHz, C₂D₂Cl₄, 25°C): δ = 8,55 (d, 1H), 8,54 (d, 1H), 8,40 (m, 4H), 7,80 (d, 1H), 7,64 (dd, 1H), 7,45 (d, 1H), 7,39 (t, 1H), 7,25 (d, 2H), 4,78 (m, 2H), 2,65 (m, 2H), 1,38 (m, 2H), 1,31 (m, 2H), 1,13 (d, 3H), 1,09 (d, 12H), 1,04 (d, 3H), 0,70 (t, 3H), 0,52 (t, 3H) ppm;
   IR (KBr): ν = 1702 (s, C=O), 1665 (s, C=O) cm⁻¹;
   UV/VIS (CHCl₃): λₘₐₓ (ε) = 483 (36500), 509 (36780) nm.
Analytische Daten zu Beispiel 31:
   9-(Di-tert. -butoxycarbonyl) amino-N- (2,6-diisopropylphenyl)-perylen-3,4-dicarbonsäureimid:
   Elementaranalyse (Gew.-% ber./gef.):
   C: 75,85/75,6; H: 6,35/6,4; N: 4,0/3,95; O: 13,8/14,05;
   Masse (MALDI-TOF): m/z = 696,3 (M⁺, 100 %);
   1H-NMR (500 MHz, C₂D₂Cl₄, 25°C): δ = 8,54 (m, 2H), 8,41 (m, 4H), 7,81 (d, 1H), 7,65 (dd, 1H), 7,40 (m, 2H), 7,24 (d, 2H), 2,64 (m, 2H), 1,29 (s, 18H), 1,08 (d, 12H) ppm;
   IR (KBr): ν = 1750 (s, C=O), 1703 (s, C=O), 1665 (s, C=O), 1592 (s, C=O) cm⁻¹;
   UV/VIS (CHCl₃): λₘₐₓ (ε) = 485 (37500), 507 (37430) nm.
Analytische Daten zu Beispiel 32:
   9-(Di-tert.-butoxycarbonyl)amino-N-(4-methoxyphenyl)-perylen-3,4-dicarbonsäureimid:
   Elementaranalyse (Gew.-% ber./gef.):
   C: 72,9/72,6; H: 5,3/5,4; N: 4,35/4,4; O: 17,45/17,6;
   Masse (MALDI-TOF): m/z = 642,3 (M⁺, 100 %);
   IR (KBr): ν = 1747 (s, C=O), 1701 (s, C=O), 1666 (s, C=O), 1590 (s, C=O) cm⁻¹;
   UV/VIS (CHCl₃): λₘₐₓ (ε) = 483 (37950), 506 (37330) nm.

### B) Anwendung von erfindungsgemäßen Rylenfarbstoffen I

### a) Herstellung von thermochrom eingefärbten hochmolekularen Materialien

### Beispiele 33 bis 47

Zur Herstellung thermochrom eingefärbter thermoplastischer Kunststoffe wurden jeweils x g des Farbstoffs I sowie gegebenenfalls z g des transparenten Pigments P mit 100 g eines der Matrixpolymeren
- PS:: Polystyrol 144C glasklar (BASF)
- PMMA:: Polymethylmethacrylat Formmasse 7N glasklar (Röhm) bzw.
- PC:: Polycarbonat Makrolon® 2858 (Bayer)
vermischt und auf konventionelle Weise durch Extrusion und Spritzguß in ein Halbzeug überführt.

Zur Herstellung thermochromer Lackierungen wurde eine Mischung von jeweils x g des Farbstoffs I und 100 g eines Alkyd-Melamin-Einbrennlacks auf Lösungsmittelbasis (45 Gew.-% Feststoffanteil) mit 150 g Glaskugeln (3 mm Durchmesser) 30 min mit einem Skandexgerät geschüttelt, dann mit einer Rakel auf Blech übertragen und 30 min bei 130°C eingebrannt (Schichtdicke im getrockneten Zustand 55 ± 5 µm).

Die thermochrome Farbänderung (Primärfarbe → Sekundärfarbe) der eingefärbten polymeren Systeme wurde durch 15-minütiges Tempern auf die jeweilige Umwandlungstemperatur T°C induziert.

Weitere Einzelheiten zu diesen Versuchen sowie deren Ergebnisse sind in Tabelle 5 zusammengestellt.

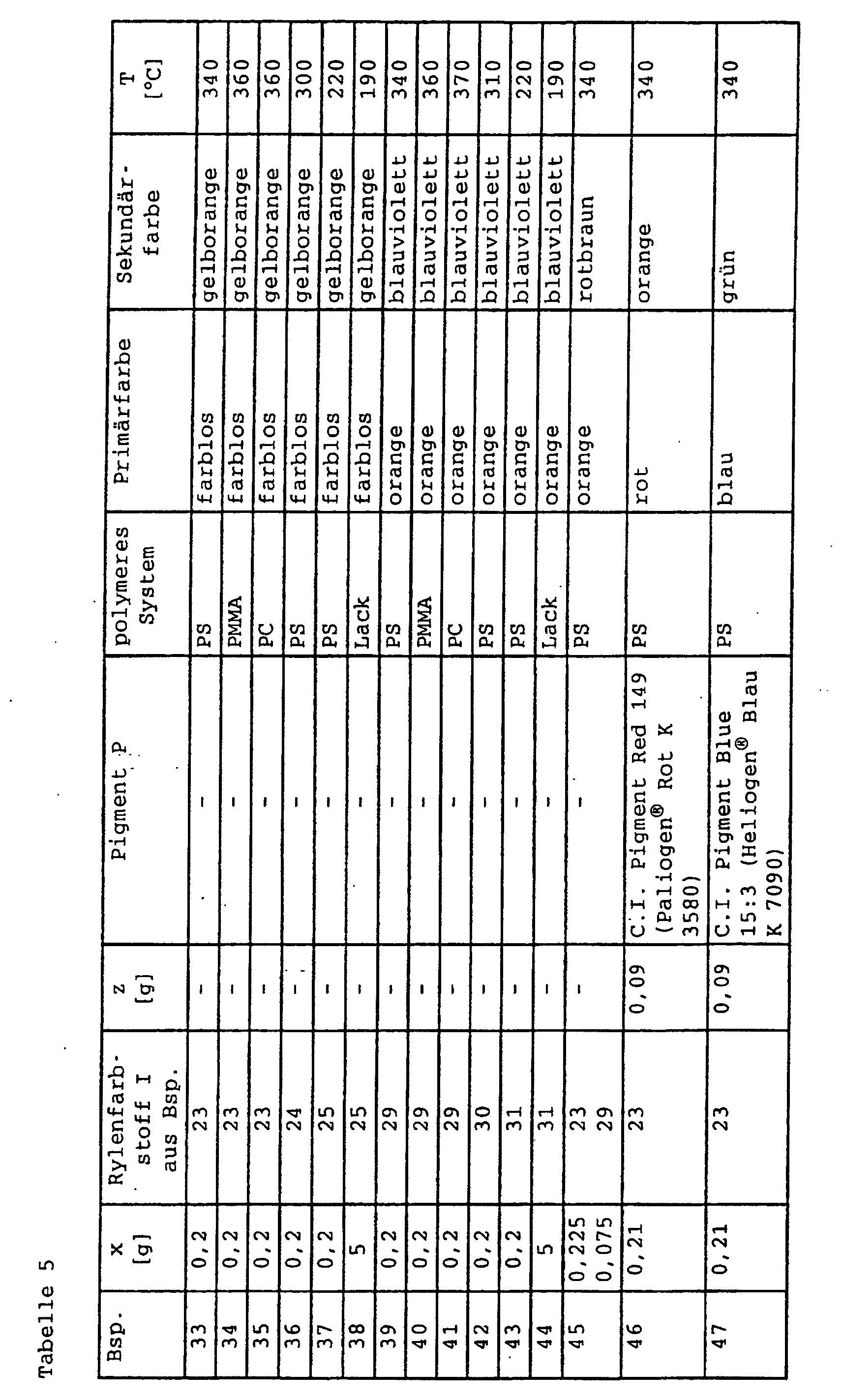

### b) Herstellung von lasermarkierbaren bzw. -beschriftbaren Einfärbungen

### Beispiele 48 bis 51

Zur Herstellung lasermarkierbarer bzw. -beschrif tbarer Einfärbungen wurden die Farbstoffe aus Beispiel 34 bzw. 40, wie unter a) beschrieben, jedoch unter Zusatz von y g des (Nah)Infrarot-Absorbers A in PMMA eingearbeitet.

Anschließend wurde das eingefärbte Halbzeug mit einem Nd-YAG-Laser (Emissionswellenlänge von 1064 nm, Lasernennleistung 40 Watt; Scanrate 1000 mm/s; Beispiele 48 und 50) bzw. mit einer Halbleiterlaserdiode (Emissionswellenlänge von 780 nm, Lasernennleistung 1 Watt, Scanrate 100 mm/s; Beispiele 49 und 51) markiert.

Weitere Einzelheiten zu diesen Versuchen sowie deren Ergebnisse sind in Tabelle 6 zusammengestellt.

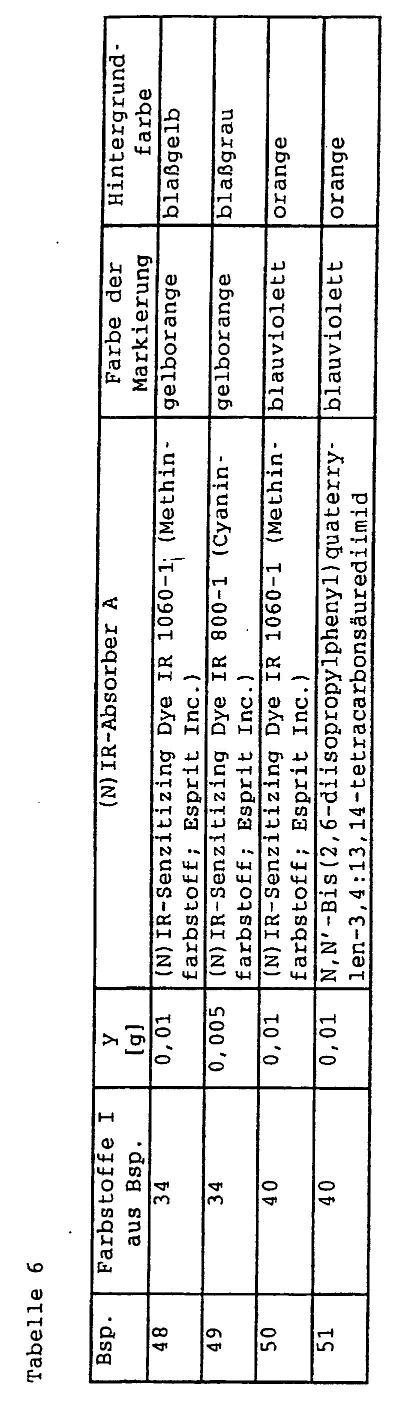

## Patentansprüche

1. Thermochrome Rylenfarbstoffe der allgemeinen Formel I 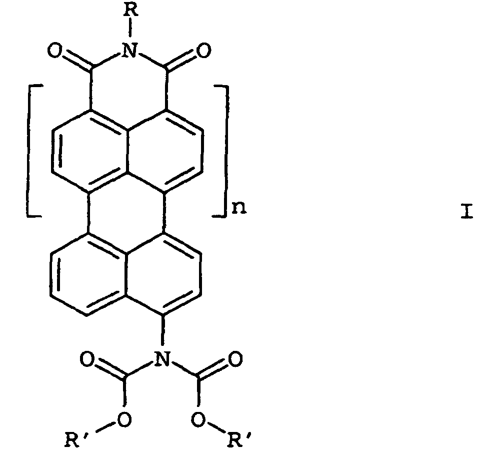 in der die Variablen folgende Bedeutung haben:
R Wasserstoff oder C₁-C₃₀-Alkyl, dessen Kohlenstoffkette durch eine oder mehrere Gruppierungen -O-, -S-, -NR¹-, - CO- und/oder -SO₂- unterbrochen sein kann und das durch Cyano, C₁-C₆-Alkoxy, Phenyl oder 2-Naphthyl, das jeweils durch C₁-C₁₈-Alkyl oder C₁-C₆-Alkoxy substituiert sein kann, oder einen über ein Stickstoffatom gebundenen 5-bis 7-gliedrigen heterocyclischen Rest, der weitere Heteroatome enthalten und aromatisch sein kann, ein- oder mehrfach substituiert sein kann;
C₅-C₈-Cycloalkyl, dessen Kohlenstoffgerüst durch eine oder mehrere Gruppierungen -O-, -S- und/oder -NR¹- unterbrochen sein kann und das durch C₁-C₆-Alkyl ein- oder mehrfach substituiert sein kann;
Phenyl, 2-Naphthyl, 2- oder 3-Pyrryl, 2-, 3- oder 4-Pyridyl, 2-, 4- oder 5-Pyrimidyl, 3-, 4- oder 5-Pyrazolyl, 2-, 4- oder 5-Imidazolyl, 2-, 4- oder 5-Thiazolyl, 3-(1,2,4-Triazyl), 2-(1,3,5-Triazyl), 6-Chinaldyl, 3-, 5-, 6- oder 8-Chinolinyl, 2-Benzoxazolyl, 2-Benzothiazolyl, 5-Benzothiadiazolyl, 2- oder 5-Benzimidazolyl oder 1- oder 5-Isochinolyl, das jeweils durch C₁-C₁₈-Alkyl, C₁-C₆-Alkoxy, Cyano, -CONHR², -NHCOR² und/oder Phenylazo, 2-Naphthylazo, 2-Pyridylazo oder 2-Pyrimidylazo, das jeweils durch C₁-C₁₀-Alkyl, C₁-C₆-Alkoxy oder Cyano substituiert sein kann, ein- oder mehrfach substituiert sein kann;
R' C₂-C₃₀-Alkyl, dessen Kohlenstoffkette durch eine oder mehrere Gruppierungen -O- und/oder -CO- unterbrochen sein kann und das durch Cyano, C₁-C₆-Alkoxy, C₅-C₈-Cycloalkyl, dessen Kohlenstoffgerüst durch eine oder mehrere Gruppierungen -O-, -S- und/oder -NR¹- unterbrochen sein kann und das durch C₁-C₆-Alkyl substituiert sein kann, Phenyl oder 2-Naphthyl, das jeweils durch C₁-C₁₈-Alkyl oder C₁-C₆-Alkoxy substituiert sein kann, oder einen über ein Stickstoffatom gebundenen 5- bis 7-gliedrigen heterocyclischen Rest, der weitere Heteroatome enthalten und aromatisch sein kann, ein- oder mehrfach substituiert sein kann;
Methyl, das durch Phenyl, 2-Naphthyl, 2- oder 3-Pyrryl, 2-, 3- oder 4-Pyridyl, 2-, 4- oder 5-Pyrimidyl, 3-, 4-oder 5-Pyrazolyl, 2-, 4- oder 5-Imidazolyl, 2-, 4- oder 5-Thiazolyl, 3-(1,2,4-Triazyl), 2-(1,3,5-Triazyl), 6-Chinaldyl, 3-, 5-, 6- oder 8-Chinolinyl, 2-Benzoxazolyl, 2-Benzothiazolyl, 5-Benzothiadiazolyl, 2- oder 5-Benzimidazolyl oder 5-Isochinolyl und/oder C₅-C₈-Cycloalkyl, das jeweils durch C₁-C₁₈-Alkyl oder C₁-C₆-Alkoxy substituiert sein kann, ein- oder zweifach substituiert ist; C₅-C₈-Cycloalkyl, dessen Kohlenstoffgerüst durch eine oder mehrere Gruppierungen -O-, -S- und/oder -NR¹- unterbrochen sein kann und das durch C₁-C₆-Alkyl ein- oder mehrfach substituiert sein kann;
R¹ Wasserstoff oder C₁-C₆-Alkyl;
R² Wasserstoff; C₁-C₁₈-Alkyl; Phenyl, 2-Naphthyl, 2- oder 3-Pyrryl, 2-, 3- oder 4-Pyridyl, 2-, 4- oder 5-Pyrimidyl, 3-, 4- oder 5-Pyrazolyl, 2-, 4- oder 5-Imidazolyl, 2-, 4-oder 5-Thiazolyl, 3-(1,2,4-Triazyl), 2-(1,3,5-Triazyl), 6-Chinaldyl, 3-, 5-, 6- oder 8-Chinolinyl, 2-Benzoxazolyl, 2-Benzothiazolyl, 5-Benzothiadiazolyl, 2- oder 5-Benzimidazolyl oder 1- oder 5-Isochinolyl, das jeweils durch C₁-C₆-Alkyl, C₁-C₆-Alkoxy oder Cyano substituiert sein kann;
n 0 oder 1.

2. Rylenfarbstoffe der Formel I nach Anspruch 1, in der die Variablen folgende Bedeutung haben:
R Wasserstoff oder C₁-C₃₀-Alkyl, dessen Kohlenstoffkette durch eine oder mehrere Gruppierungen -O- und/oder -CO- unterbrochen sein kann und das durch Cyano, C₁-C₆-Alkoxy, Phenyl oder 2-Naphthyl, das jeweils durch C₁-C₁₈-Alkyl oder C₁-C₆-Alkoxy substituiert sein kann, oder einen über ein Stickstoffatom gebundenen 5- bis 7-gliedrigen heterocyclischen Rest, der weitere Heteroatome enthalten und aromatisch sein kann, ein- oder mehrfach substituiert sein kann;
C₅-C₈-Cycloalkyl, dessen Kohlenstoffgerüst durch eine oder mehrere Gruppierungen -O- und/oder -NR¹- unterbrochen sein kann und das durch C₁-C₆-Alkyl ein- oder mehrfach substituiert sein kann;
Phenyl, 2-Naphthyl, 2- oder 3-Pyrryl, 2-, 3- oder 4-Pyridyl, 2-, 4- oder 5-Pyrimidyl, 3-, 4- oder 5-Pyrazolyl, 2-, 4- oder 5-Imidazolyl, 2-, 4- oder 5-Thiazolyl, 3-(1,2,4-Triazyl), 2-(1,3,5-Triazyl), 6-Chinaldyl, 3-, 5-, 6- oder 8-Chinolinyl, 2-Benzoxazolyl, 2-Benzothiazolyl, 5-Benzothiadiazolyl, 2- oder 5-Benzimidazolyl oder 1- oder 5-Isochinolyl, das jeweils durch C₁-C₁₈-Alkyl, C₁-C₆-Alkoxy, Cyano, -CONHR² oder -NHCOR² ein- oder mehrfach substituiert sein kann;
R' C₂-C₃₀-Alkyl, dessen Kohlenstoffkette durch eine oder mehrere Gruppierungen -O- und/oder -CO- unterbrochen sein kann und das durch C₁-C₆-Alkoxy, C₅-C₈-Cycloalkyl, dessen Kohlenstoffgerüst durch eine oder mehrere Gruppierungen -O- und/oder -NR¹- unterbrochen sein kann und das durch C₁-C₆-Alkyl substituiert sein kann, oder Phenyl oder 2-Naphthyl, das jeweils durch C₁-C₁₈-Alkyl oder C₁-C₆-Alkoxy substituiert sein kann, ein- oder mehrfach substituiert sein kann;
Methyl, das durch Phenyl, 2-Naphthyl und/oder C₅-C₈-Cycloalkyl, das jeweils durch C₁-C₁₈-Alkyl oder C₁-C₆-Alkoxy substituiert sein kann, ein- oder zweifach substituiert ist;
C₅-C₈-Cycloalkyl, dessen Kohlenstoffgerüst durch eine oder mehrere Gruppierungen -O- und/oder -NR¹- unterbrochen sein kann und das durch C₁-C₆-Alkyl ein- oder mehrfach substituiert sein kann.

3. Rylenfarbstoffe der Formel I nach Anspruch 1, in der die Variablen folgende Bedeutung haben:
R Wasserstoff oder C₁-C₃₀-Alkyl, dessen Kohlenstoffkette durch eine oder mehrere Gruppierungen -O- und/oder -CO- unterbrochen sein kann und das durch C₁-C₆-Alkoxy oder Phenyl oder 2-Naphthyl, das jeweils durch C₁-C₁₈-Alkyl oder C₁-C₆-Alkoxy substituiert sein kann, ein- oder zweifach substituiert ist;
C₅-C₈-Cycloalkyl, das durch C₁-C₆-Alkyl ein- oder mehrfach substituiert sein kann;
Phenyl oder 2-Naphthyl, das jeweils durch C₁-C₁₈-Alkyl, C₁-C₆-Alkoxy oder Cyano ein- oder mehrfach substituiert sein kann;
R' C₂-C₃₀-Alkyl, dessen Kohlenstoffkette durch eine oder mehrere Gruppierungen -O- unterbrochen sein kann und das durch C₁-C₆-Alkoxy, C₅-C₈-Cycloalkyl, das durch C₁-C₆-Alkyl substituiert sein kann, oder Phenyl oder 2-Naphthyl, das jeweils durch C₁-C₁₈-Alkyl oder C₁-C₆-Alkoxy substituiert sein kann, ein- oder mehrfach substituiert sein kann;
Methyl, das durch Phenyl, 2-Naphthyl und/oder C₅-C₈-Cycloalkyl, das jeweils durch C₁-C₁₈-Alkyl oder C₁-C₆-Alkoxy substituiert sein kann, ein- oder zweifach substituiert ist;
C₅-C₈-Cycloalkyl, das durch C₁-C₆-Alkyl ein- oder mehrfach substituiert sein kann.

4. Verfahren zur Herstellung von Rylenfarbstoffen der Formel I gemäß Anspruch 1, **dadurch gekennzeichnet, daß** man
a) ein Perylen-3,4-dicarbonsäureimid der allgemeinen Formel IIa 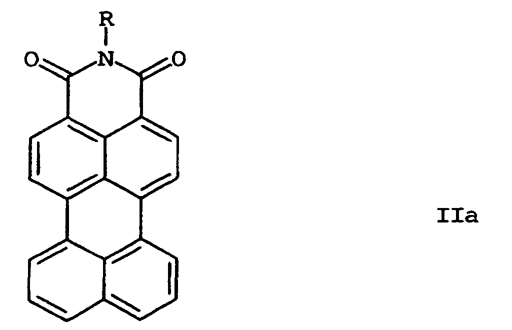 in Gegenwart einer aliphatischen Monocarbonsäure mit elementarem Brom regioselektiv monobromiert,
b1) das in Schritt a) gebildete 9-Bromperylen-3,4-dicarbonsäureimid der allgemeinen Formel IIIa 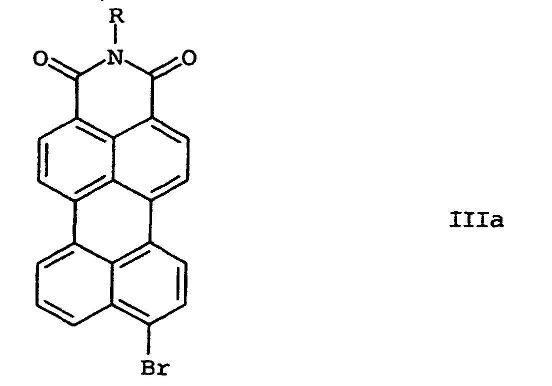 bzw. ein auf bekannte Weise durch Imidierung von 4-Bromnaphthalin-1,8-dicarbonsäureanhydrid hergestelltes 4-Bromnaphthalin-1,8-dicarbonsäureimid der allgemeinen Formel IIIb 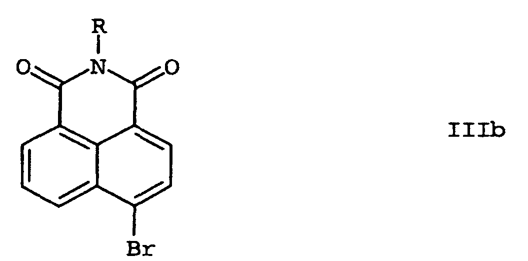 in Gegenwart eines aprotischen organischen Lösungsmittels, eines Übergangsmetallkatalysatorsystems und einer Base in einer Aryl-N-Kupplungsreaktion mit einem Benzophenonimin der allgemeinen Formel IV 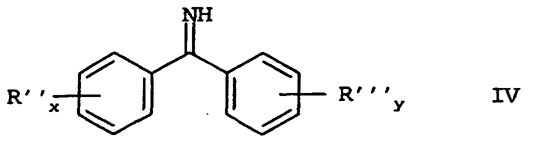 in der die Variablen
R'', R''' unabhängig voneinander Wasserstoff, C₁-C₆-Alkyl oder C₁-C₆-Alkoxy und
x, y unabhängig voneinander eine ganze Zahl von 1 bis 3 bedeuten,
umsetzt und
b2) das gebildete Ketimin in Gegenwart einer Säure und eines polaren, aprotischen Lösungsmittels zu einem Aminorylendicarbonsäureimid der allgemeinen Formel V 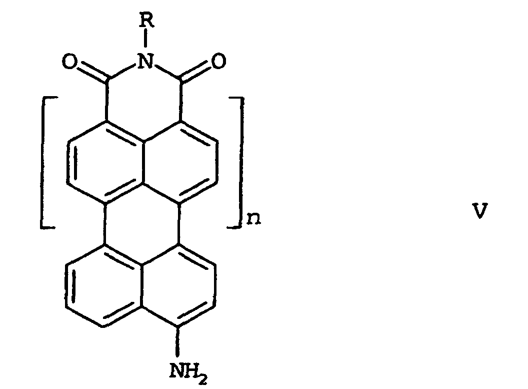 hydrolysiert und
c) dieses anschließend in Gegenwart eines polaren, aprotischen Lösungsmittels und einer Base mit einem Dicarbonat der allgemeinen Formel VI 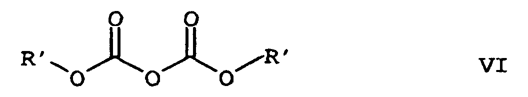 zu dem Rylenfarbstoff I umsetzt.

5. Verfahren zur Herstellung von Aminorylendicarbonsäureimiden der allgemeinen Formel V 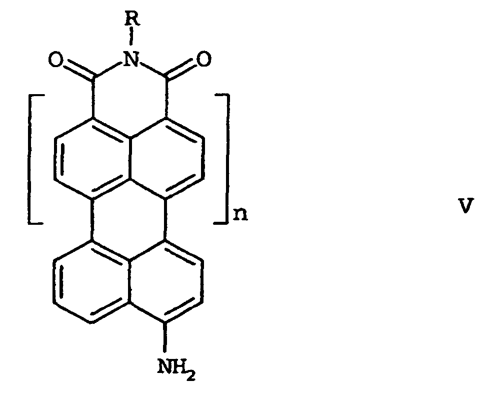 in der die Variablen folgende Bedeutung haben:
R Wasserstoff oder C₁-C₃₀-Alkyl, dessen Kohlenstoffkette durch eine oder mehrere Gruppierungen -O-, -S-, -NR¹-, - CO- und/oder -SO₂- unterbrochen sein kann und das durch Cyano, C₁-C₆-Alkoxy, Phenyl oder 2-Naphthyl, das jeweils durch C₁-C₁₈-Alkyl oder C₁-C₆-Alkoxy substituiert sein kann, oder einen über ein Stickstoffatom gebundenen 5-bis 7-gliedrigen heterocyclischen Rest, der weitere Heteroatome enthalten und aromatisch sein kann, ein- oder mehrfach substituiert sein kann;
C₅-C₈-Cycloalkyl, dessen Kohlenstoffgerüst durch eine oder mehrere Gruppierungen -O-, -S- und/oder -NR¹- unterbrochen sein kann und das durch C₁-C₆-Alkyl ein- oder mehrfach substituiert sein kann;
Phenyl, 2-Naphthyl, 2- oder 3-Pyrryl, 2-, 3- oder 4-Pyridyl, 2-, 4- oder 5-Pyrimidyl, 3-, 4- oder 5-Pyrazolyl, 2-, 4- oder 5-Imidazolyl, 2-, 4- oder 5-Thiazolyl, 3-(1,2,4-Triazyl), 2-(1,3,5-Triazyl), 6-Chinaldyl, 3-, 5-, 6- oder 8-Chinolinyl, 2-Benzoxazolyl, 2-Benzothiazolyl, 5-Benzothiadiazolyl, 2- oder 5-Benzimidazolyl oder 1- oder 5-Isochinolyl, das jeweils durch C₁-C₁₈-Alkyl, C₁-C₆-Alkoxy, Cyano, -CONHR², -NHCOR² und/oder Aryl- oder Hetarylazo, das jeweils durch C₁-C₁₀-Alkyl, C₁-C₆-Alkoxy oder Cyano substituiert sein kann, ein- oder mehrfach substituiert sein kann;
R¹ Wasserstoff oder C₁-C₆-Alkyl;
R² Wasserstoff; C₁-C₁₈-Alkyl; Phenyl, 2-Naphthyl, 2- oder 3-Pyrryl, 2-, 3- oder 4-Pyridyl, 2-, 4- oder 5-Pyrimidyl, 3-, 4- oder 5-Pyrazolyl, 2-, 4- oder 5-Imidazolyl, 2-, 4-oder 5-Thiazolyl, 3-(1,2,4-Triazyl), 2-(1,3,5-Triazyl), 6-Chinaldyl, 3-, 5-, 6- oder 8-Chinolinyl, 2-Benzoxazolyl, 2-Benzothiazolyl, 5-Benzothiadiazolyl, 2- oder 5-Benzimidazolyl oder 1- oder 5-Isochinolyl, das jeweils durch C₁-C₆-Alkyl, C₁-C₆-Alkoxy oder Cyano substituiert sein kann;
n 0 oder 1,
**dadurch gekennzeichnet, daß** man ein Bromrylendicarbonsäureimid der allgemeinen Formel III 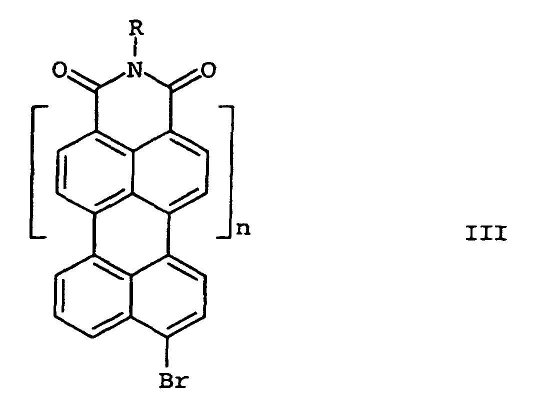 in Gegenwart eines aprotischen organischen Lösungsmittels, eines Übergangsmetallkatalysatorsystems und einer Base in einer Aryl-N-Kupplungsreaktion mit einem Benzophenonimin der allgemeinen Formel IV 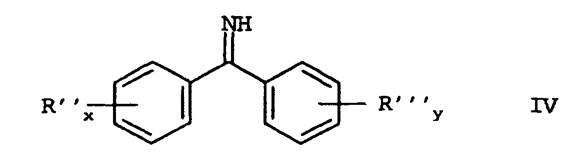 umsetzt und das gebildete Ketimin in Gegenwart einer Säure und eines polaren, aprotischen Lösungsmittels hydrolysiert.

6. 9-Aminoperylen-3,4-dicarbonsäureimide der allgemeinen Formel Va 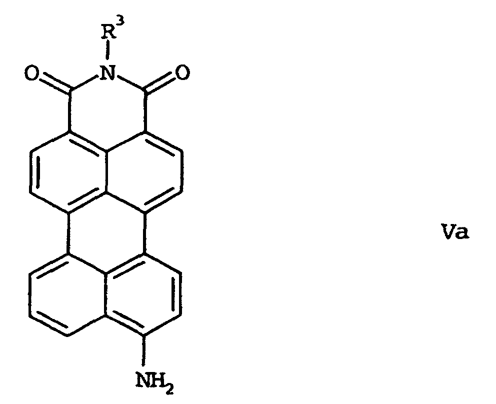 in der die Variablen folgende Bedeutung haben:
R³ Wasserstoff oder C₁-C₃₀-Alkyl, dessen Kohlenstoffkette durch eine oder mehrere Gruppierungen -O-, -S-, -NR¹-, - CO- und/oder -SO₂- unterbrochen ist und/oder das durch Cyano, C₁-C₆-Alkoxy, Phenyl oder 2-Naphthyl, das jeweils durch C₁-C₁₈-Alkyl oder C₁-C₆-Alkoxy substituiert sein kann, oder einen über ein Stickstoffatom gebundenen 5-bis 7-gliedrigen heterocyclischen Rest, der weitere Heteroatome enthalten und aromatisch sein kann, ein- oder mehrfach substituiert ist;
C₅-C₈-Cycloalkyl, dessen Kohlenstoffgerüst durch eine oder mehrere Gruppierungen -O-, -S- und/oder -NR¹- unterbrochen sein kann und das durch C₁-C₆-Alkyl ein- oder mehrfach substituiert sein kann;
Phenyl, 2-Naphthyl, 2- oder 3-Pyrryl, 2-, 3- oder 4-Pyridyl, 2-, 4- oder 5-Pyrimidyl, 3-, 4- oder 5-Pyrazolyl, 2-, 4- oder 5-Imidazolyl, 2-, 4- oder 5-Thiazolyl, 3-(1,2,4-Triazyl), 2-(1,3,5-Triazyl), 6-Chinaldyl, 3-, 5-, 6- oder 8-Chinolinyl, 2-Benzoxazolyl, 2-Benzothiazolyl, 5-Benzothiadiazolyl, 2- oder 5-Benzimidazolyl oder 1- oder 5-Isochinolyl, das jeweils durch C₁-C₁₈-Alkyl, C₁-C₆-Alkoxy, Cyano, -CONHR², -NHCOR² und/oder Phenylazo, 2-Naphthylazo, 2-Pyridylazo oder 2-Pyrimidylazo, das jeweils durch C₁-C₁₀-Alkyl, C₁-C₆-Alkoxy oder Cyano substituiert sein kann, ein- oder mehrfach substituiert sein kann;
R¹ Wasserstoff oder C₁-C₆-Alkyl;
R² Wasserstoff; C₁-C₁₈-Alkyl; Phenyl, 2-Naphthyl, 2- oder 3-Pyrryl, 2-, 3- oder 4-Pyridyl, 2-, 4- oder 5-Pyrimidyl, 3-, 4- oder 5-Pyrazolyl, 2-, 4- oder 5-Imidazolyl, 2-, 4-oder 5-Thiazolyl, 3-(1,2,4-Triazyl), 2-(1,3,5-Triazyl), 6-Chinaldyl, 3-, 5-, 6- oder 8-Chinolinyl, 2-Benzoxazolyl, 2-Benzothiazolyl, 5-Benzothiadiazolyl, 2- oder 5-Benzimidazolyl oder 1- oder 5-Isochinolyl, das jeweils durch C₁-C₆-Alkyl, C₁-C₆-Alkoxy oder Cyano substituiert sein kann.

7. Verfahren zur Herstellung von 9-Bromperylen-3,4-dicarbonsäureimiden der allgemeinen Formel IIIa 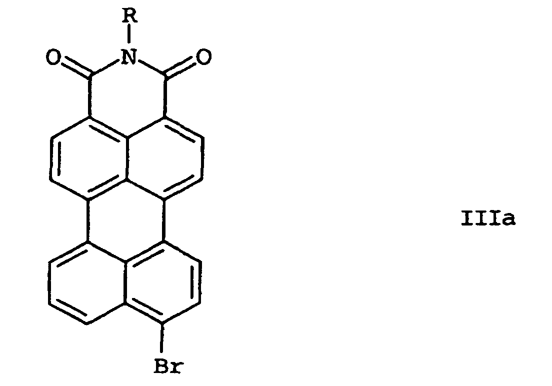 in der die Variablen folgende Bedeutung haben:
R Wasserstoff oder C₁-C₃₀-Alkyl, dessen Kohlenstoffkette durch eine oder mehrere Gruppierungen -O-, -S-, -NR¹-, - CO- und/oder -SO₂- unterbrochen sein kann und das durch Cyano, C₁-C₆-Alkoxy, Phenyl oder 2-Naphthyl, das jeweils durch C₁-C₁₈-Alkyl oder C₁-C₆-Alkoxy substituiert sein kann, oder einen über ein Stickstoffatom gebundenen 5-bis 7-gliedrigen heterocyclischen Rest, der weitere Heteroatome enthalten und aromatisch sein kann, ein- oder mehrfach substituiert sein kann;
C₅-C₈-Cycloalkyl, dessen Kohlenstoffgerüst durch eine oder mehrere Gruppierungen -O-, -S- und/oder -NR¹- unterbrochen sein kann und das durch C₁-C₆-Alkyl ein- oder mehrfach substituiert sein kann;
Phenyl, 2-Naphthyl, 2- oder 3-Pyrryl, 2-, 3- oder 4-Pyridyl, 2-, 4- oder 5-Pyrimidyl, 3-, 4- oder 5-Pyrazolyl, 2-, 4- oder 5-Imidazolyl, 2-, 4- oder 5-Thiazolyl, 3-(1,2,4-Triazyl), 2-(1,3,5-Triazyl), 6-Chinaldyl, 3-, 5-, 6- oder 8-Chinolinyl, 2-Benzoxazolyl, 2-Benzothiazolyl, 5-Benzothiadiazolyl, 2- oder 5-Benzimidazolyl oder 1- oder 5-Isochinolyl, das jeweils durch C₁-C₁₈-Alkyl, C₁-C₆-Alkoxy Cyano, -CONHR², -NHCOR² und/oder Phenylazo, 2-Naphthylazo, 2-Pyridylazo oder 2-Pyrimidylazo, das jeweils durch C₁-C₁₀-Alkyl, C₁-C₆-Alkoxy oder Cyano substituiert sein kann, ein- oder mehrfach substituiert sein kann;
R¹ Wasserstoff oder C₁-C₆-Alkyl;
R² Wasserstoff; C₁-C₁₈-Alkyl; Phenyl, 2-Naphthyl, 2- oder 3-Pyrryl, 2-, 3- oder 4-Pyridyl, 2-, 4- oder 5-Pyrimidyl, 3-, 4- oder 5-Pyrazolyl, 2-, 4- oder 5-Imidazolyl, 2-, 4-oder 5-Thiazolyl, 3-(1,2,4-Triazyl), 2-(1,3,5-Triazyl), 6-Chinaldyl, 3-, 5-, 6- oder 8-Chinolinyl, 2-Benzoxazolyl, 2-Benzothiazolyl, 5-Benzothiadiazolyl, 2- oder 5-Benzimidazolyl oder 1- oder 5-Isochinolyl, das jeweils durch C₁-C₆-Alkyl, C₁-C₆-Alkoxy oder Cyano substituiert sein kann,
**dadurch gekennzeichnet, daß** man ein Perylen-3,4-dicarbonsäureimid der allgemeinen Formel IIa 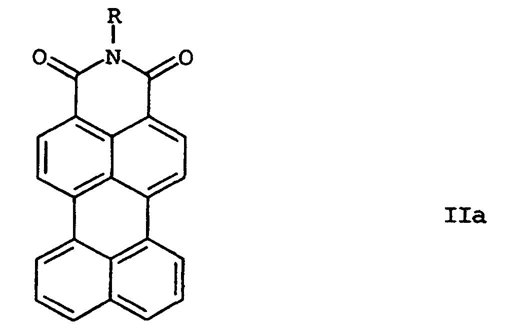 in Gegenwart einer aliphatischen Monocarbonsäure mit elementarem Brom umsetzt.

8. Verwendung von Rylenfarbstoffen der Formel I gemäß Anspruch 1 zur Einfärbung von hochmolekularen organischen und anorganischen Materialien.

9. Verwendung nach Anspruch 8, **dadurch gekennzeichnet, daß** Kunststoffe, Lacke, Druckfarben und oxidische Schichtsysteme eingefärbt werden.

10. Verwendung nach Anspruch 8 oder 9, **dadurch gekennzeichnet, daß** lasermarkierbare und laserbeschriftbare Einfärbungen hergestellt werden.

## Claims

1. A thermochromic rylene dye of the general formula I 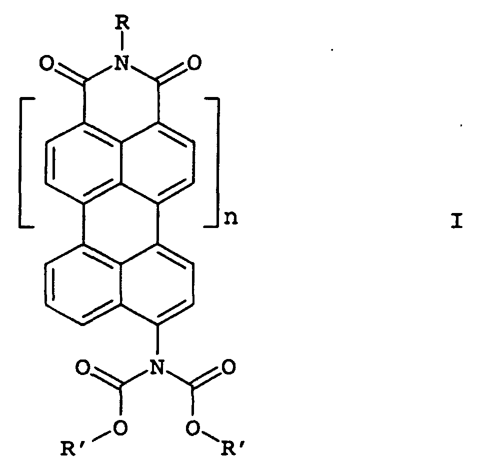 where
R is hydrogen or C₁-C₃₀-alkyl, whose carbon chain may be interrupted by one or more -O-, -S-, -NR¹-, -CO- and/or - SO₂- groups and which may be monosubstituted or polysubstituted by cyano, C₁-C₆-alkoxy, phenyl or 2-napthyl, each of which may be substituted by C₁-C₁₈-alkyl or C₁-C₆-alkoxy, or a 5- to 7-membered heterocyclic radical which is bonded via a nitrogen atom and may contain further heteroatoms and may be aromatic; C₅-C₈-cycloalkyl, whose carbon skeleton may be interrupted by one or more -O-, -S- and/or -NR¹- groups and which may be monosubstituted or polysubstituted by C₁-C₆-alkyl;
phenyl, 2-naphthyl, 2- or 3-pyrryl, 2-, 3- or 4-pyridyl, 2-, 4- or 5-pyrimidyl, 3-, 4- or 5-pyrazolyl, 2-, 4- or 5-imidazolyl, 2-, 4- or 5-thiazolyl, 3-(1,2,4-triazyl), 2-(1,3,5-triazyl), 6-quinaldyl, 3-, 5-, 6- or 8-quinolinyl, 2-benzoxazolyl, 2-benzothiazolyl, 5-benzothiadiazolyl, 2- or 5-benzimidazolyl or 1- or 5-isoquinolyl, each of which may be monosubstituted or polysubstituted by C₁-C₁₈-alkyl, C₁-C₆-alkoxy, cyano, - CONHR², -NHCOR² and/or phenylazo, 2-naphthylazo, 2-pyridylazo, 2-pyridylazo or 2-pyrimidylazo, each of which may be substituted by C₁-C₁₀-alkyl, C₁-C₆-alkoxy or cyano;
R' is C₂-C₃₀-alkyl, whose carbon chain may be interrupted by one or more -O- and/or -CO- groups and which may be monosubstituted or polysubstituted by cyano, C₁-C₆-alkoxy, C₅-C₈-cycloalkyl, whose carbon skeleton may be interrupted by one or more -O-, -S- and/or -NR¹-groups and which may be C₁-C₆-alkyl-substituted, phenyl or 2-naphthyl, each of which may be substituted by C₁-C₁₈-alkyl or C₁-C₆-alkoxy, or a 5- to 7-membered heterocyclic radical which is bonded via a nitrogen atom and which may contain further heteroatoms and which may be aromatic;
methyl, which is monosubstituted or disubstituted by phenyl, 2-naphthyl, 2- or 3-pyrryl, 2-, 3- or 4-pyridyl, 2-, 4- or 5-pyrimidyl, 3-, 4- or 5-pyrazolyl, 2-, 4- or 5-imidazolyl, 2-, 4- or 5-thiazolyl, 3-(1,2,4-triazyl), 2-(1,3,5-triazyl), 6-quinaldyl, 3-, 5-, 6- or 8-quinolinyl, 2-benzoxazolyl, 2-benzothiazolyl, 5-benzothiadiazolyl, 2- or 5-benzimidazolyl or 5-isoquinolyl, each of which may be substituted by C₁-C₁₈-alkyl or C₁-C₆-alkoxy;
C₅-C₈-cycloalkyl, whose carbon skeleton may be interrupted by one or more -O-, -S- and/or -NR¹- groups and which may be monosubstituted or polysubstituted by C₁-C₆-alkyl;
R¹ is hydrogen or C₁-C₆-alkyl;
R² is hydrogen; C₁-C₁₈-alkyl; phenyl, 2-naphthyl, 2- or 3-pyrryl, 2-, 3- or 4-pyridyl, 2-, 4- or 5-pyrimidyl, 3-, 4- or 5-pyrazolyl, 2-, 4- or 5-imidazolyl, 2-, 4- or 5-thiazolyl, 3-(1,2,4-triazyl), 2-(1,3,5-triazyl), 6-quinaldyl, 3-, 5-, 6- or 8-quinolinyl, 2-benzoxazolyl, 2-benzothiazolyl, 5-benzothiadiazolyl, 2- or 5-benzimidazolyl or 1- or 5-isoquinolyl, each of which may be substituted by C₁-C₆-alkyl, C₁-C₆-alkoxy or cyano;
n is 0 or 1.

2. A rylene dye of the formula I as claimed in claim 1, where
R is hydrogen or C₁-C₃₀-alkyl, whose carbon chain may be interrupted by one or more -O- and/or -CO- groups which may be monosubstituted or polysubstituted by cyano, C₁-C₆-alkoxy, phenyl or 2-naphthyl, each of which may be substituted by C₁-C₁₈-alkyl or C₁-C₆-alkoxy, or a 5- to 7-membered heterocyclic radical which is bonded via a nitrogen atom and may contain further heteroatoms and may be aromatic;
C₅-C₈-cycloalkyl, whose carbon skeleton may be interrupted by one or more -O- and/or -NR¹- groups and which may be monosubstituted or polysubstituted by C₁-C₆-alkyl;
phenyl, 2-naphthyl, 2- or 3-pyrryl, 2-, 3- or 4-pyridyl, 2-, 4- or 5-pyrimidyl, 3-, 4- or 5-pyrazolyl, 2-, 4- or 5-imidazolyl, 2-, 4- or 5-thiazolyl, 3-(1,2,4-triazyl), 2-(1,3,5-triazyl), 6-quinaldyl, 3-, 5-, 6- or 8-quinolinyl, 2-benzoxazolyl, 2-benzothiazolyl, 5-benzothiadiazolyl, 2- or 5-benzimidazolyl or 1- or 5-isoquinolyl, each of which may be monosubstituted or polysubstituted by C₁-C₁₈-alkyl, C₁-C₆-alkoxy, cyano, -CONHR² or -NHCOR²;
R' is C₂-C₃₀-alkyl, whose carbon chain may be interrupted by one or more -O- and/or -CO- groups and which may be monosubstituted or polysubstituted by C₁-C₆-alkoxy, C₅-C₈-cycloalkyl, whose carbon skeleton may be interrupted by one or more -O- and/or -NR¹- groups and which may be C₁-C₆-alkyl-substituted, or phenyl or 2-naphthyl, each of which may be substituted by C₁-C₁₈-alkyl or C₁-C₆-alkoxy;
methyl, which is monosubstituted or disubstituted by phenyl, 2-naphthyl and/or C₅-C₈-cycloalkyl, each of which may be substituted by C₁-C₁₈-alkyl or C₁-C₆-alkoxy;
C₅-C₈-cycloalkyl, whose carbon skeleton may be interrupted by one or more -O- and/or -NR¹- groups and which may be monosubstituted or polysubstituted by C₁-C₆-alkyl.

3. A rylene dye of the formula I as claimed in claim 1, where
R is hydrogen or C₁-C₃₀-alkyl, whose carbon chain may be interrupted by one or more -O- and/or -CO- groups which may be monosubstituted or polysubstituted by C₁-C₆-alkoxy or phenyl or 2-naphthyl, each of which may be substituted by C₁-C₁₈-alkyl or C₁-C₆-alkoxy;
C₅-C₈-cycloalkyl which may be monosubstituted or polysubstituted by C₁-C₆-alkyl;
phenyl or 2-naphthyl, each of which may be monosubstituted or polysubstituted by C₁-C₁₈-alkyl, C₁-C₆-alkoxy or cyano;
R' is C₂-C₃₀-alkyl, whose carbon chain may be interrupted by one or more -O- groups and which may be monosubstituted or polysubstituted by C₁-C₆-alkoxy, C₅-C₈-cycloalkyl which may be C₁-C₆-alkyl-substituted, or phenyl or 2-naphthyl, each of which may be substituted by C₁-C₁₈-alkyl or C₁-C₆-alkoxy;
methyl, which is monosubstituted or disubstituted by phenyl, 2-naphthyl and/or C₅-C₈-cycloalkyl, each of which may be substituted by C₁-C₁₈-alkyl or C₁-C₆-alkoxy; C₅-C₈-cycloalkyl, which may be monosubstituted or polysubstituted by C₁-C₆-alkyl.

4. A process for the preparation of a rylene dye of the formula I as claimed in claim 1, which comprises
a) regioselectively monobrominating a perylene-3,4-dicarboximide of the general formula IIa 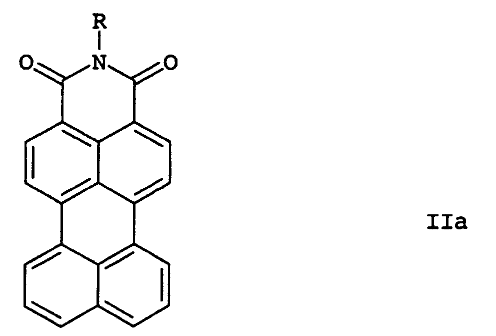 using elemental bromine in the presence of an aliphatic monocarboxylic acid,
b1) reacting the 9-bromoperylene-3,4-dicarboximide of the general formula IIIa 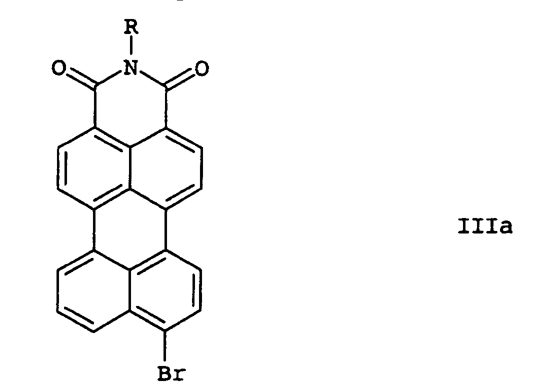 formed in step a) or a
4-bromonaphthalene-1,8-dicarboximide of the general formula IIIb 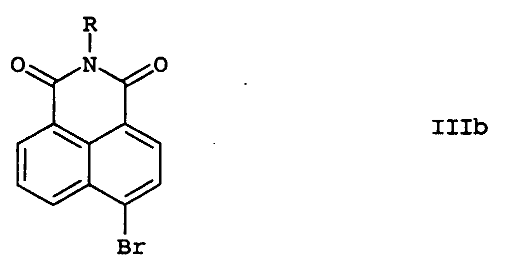 prepared in a known manner by imidation of 4-bromonaphthalene-1,8-dicarboxylic anhydride with a benzophenonimine of the general formula IV 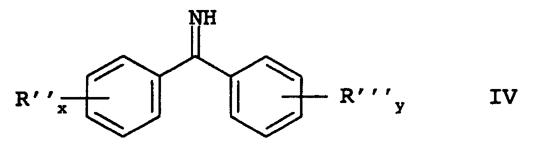 where
R'', R''', independently of one another, are hydrogen, C₁-C₆-alkyl or C₁-C₆-alkoxy and
x, y, independently of one another, are an integer from 1 to 3, in the presence of an aprotic organic solvent, a transition-metal catalyst system and a base in an aryl-N coupling reaction and
b2) hydrolyzing the resultant ketimine in the presence of an acid and in the presence of a polar, aprotic solvent to give an aminorylenedicarboximide of the general formula V 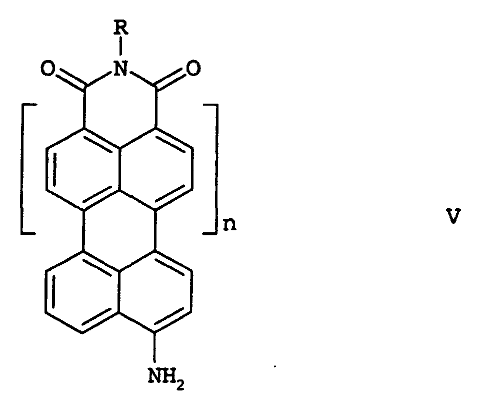 and
c) subsequently reacting the latter with a dicarbonate of the general formula VI 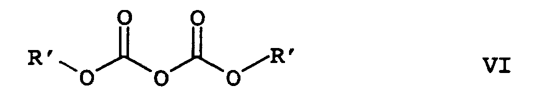 in the presence of a polar, aprotic solvent and in the presence of a base to give a rylene dye I.

5. A process for the preparation of an aminorylenedicarboximide of the general formula V 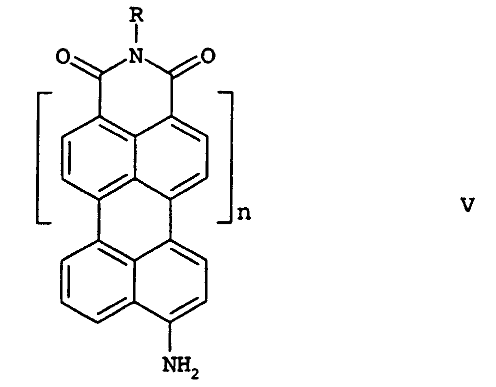 where
R is hydrogen or C₁-C₃₀-alkyl, whose carbon chain may be interrupted by one or more -O-, -S-, -NR¹-, -CO- and/or - SO₂- groups and which may be monosubstituted or polysubstituted by cyano, C₁-C₆-alkoxy, phenyl or 2-naphthyl, each of which may be substituted by C₁-C₁₈-alkyl or C₁-C₆-alkoxy, or a 5- to 7-membered heterocyclic radical which is bonded via a nitrogen atom and may contain further heteroatoms and may be aromatic; C₅-C₈-cycloalkyl, whose carbon skeleton may be interrupted by one or more -O-, -S- and/or -NR¹- groups and which may be monosubstituted or polysubstituted by C₁-C₆-alkyl;
phenyl, 2-naphthyl, 2- or 3-pyrryl, 2-, 3- or 4-pyridyl, 2-, 4- or 5-pyrimidyl, 3-, 4- or 5-pyrazolyl, 2-, 4- or 5-imidazolyl, 2-, 4- or 5-thiazolyl, 3-(1,2,4-triazyl), 2-(1,3,5-triazyl), 6-quinaldyl, 3-, 5-, 6- or 8-quinolinyl, 2-benzoxazolyl, 2-benzothiazolyl, 5-benzothiadiazolyl, 2- or 5-benzimidazolyl or 1- or 5-isoquinolyl, each of which may be monosubstituted or polysubstituted by C₁-C₁₈-alkyl, C₁-C₆-alkoxy, cyano, - CONHR², -NHCOR² and/or aryl- or hetarylazo, each of which may be substituted by C₁-C₁₀-alkyl, C₁-C₆-alkoxy or cyano;
R¹ is hydrogen or C₁-C₆-alkyl;
R² is hydrogen; C₁-C₁₈-alkyl; phenyl, 2-naphthyl, 2- or 3-pyrryl, 2-, 3- or 4-pyridyl, 2-, 4- or 5-pyrimidyl, 3-, 4- or 5-pyrazolyl, 2-, 4- or 5-imidazolyl, 2-, 4- or 5-thiazolyl, 3-(1,2,4-triazyl), 2-(1,3,5-triazyl), 6-quinaldyl, 3-, 5-, 6- or 8-quinolinyl, 2-benzoxazolyl, 2-benzothiazolyl, 5-benzothiadiazolyl, 2- or 5-benzimidazolyl or 1- or 5-isoquinolyl, each of which may be substituted by C₁-C₆-alkyl, C₁-C₆-alkoxy or cyano;
n is 0 or 1,
which comprises reacting a bromorylenedicarboximide of the general formula III 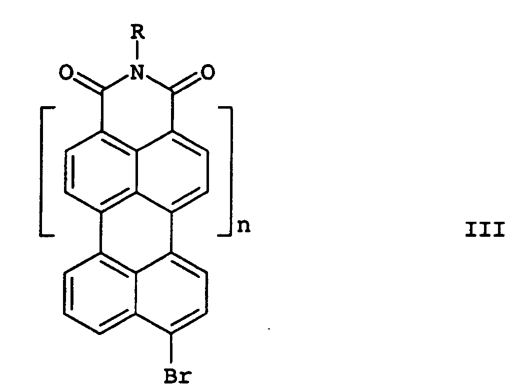 with a benzophenonimine of the general formula IV 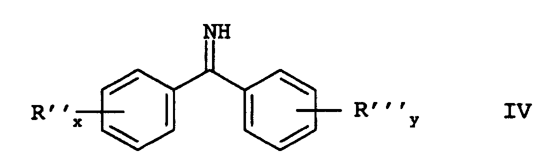 in the presence of an aprotic organic solvent, a transition-metal catalyst system and a base in an aryl-N coupling reaction, and hydrolyzing the resultant ketimine in the presence of an acid and in the presence of a polar, aprotic solvent.

6. A 9-aminoperylene-3,4-dicarboximide of the general formula Va 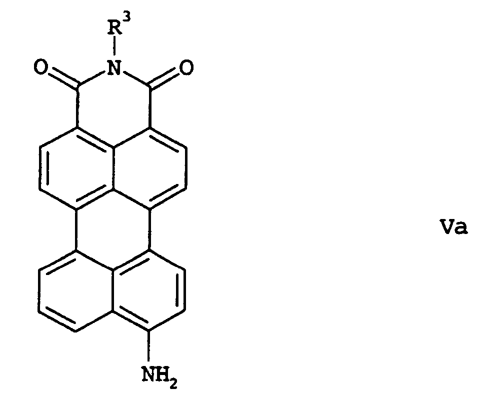 where
R³ is hydrogen or C₁-C₃₀-alkyl, whose carbon chain may be interrupted by one or more -O-, -S-, -NR¹-, -CO- and/or - SO₂- groups and which may be monosubstituted or polysubstituted by cyano, C₁-C₆-alkoxy, phenyl or 2- each of which may be substituted by C₁-C₁₈-alkyl or C₁-C₆-alkoxy, or a 5- to 7-membered heterocyclic radical which is bonded via a nitrogen atom and may contain further heteroatoms and may be aromatic;
C₅-C₈-cycloalkyl, whose carbon skeleton may be interrupted by one or more -O-, -S- and/or -NR¹- groups and which may be monosubstituted or polysubstituted by C₁-C₆-alkyl;
phenyl, 2-naphthyl, 2- or 3-pyrryl, 2-, 3- or 4-pyridyl, 2-, 4- or 5-pyrimidyl, 3-, 4- or 5-pyrazolyl, 2-, 4- or 5-imidazolyl, 2-, 4- or 5-thiazolyl, 3-(1,2,4-triazyl), 2-(1,3,5-triazyl), 6-quinaldyl, 3-, 5-, 6- or 8-quinolinyl, 2-benzoxazolyl, 2-benzothiazolyl, 5-benzothiadiazolyl, 2- or 5-benzimidazolyl or 1- or 5-isoquinolyl, each of which may be monosubstituted or polysubstituted by C₁-C₁₈-alkyl, C₁-C₆-alkoxy, cyano, - CONHR², -NHCOR² and/or phenylazo, 2-naphthylazo, 2-pydridylazo or 2-pyrimidylazo, each of which may be substituted by C₁-C₁₀-alkyl, C₁-C₆-alkoxy or cyano;
R¹ is hydrogen or C₁-C₆-alkyl;
R² is hydrogen, C₁-C₁₈-alkyl; phenyl, 2-naphthyl, 2- or 3-pyrryl, 2-, 3- or 4-pyridyl, 2-, 4- or 5-pyrimidyl, 3-, 4- or 5-pyrazolyl, 2-, 4- or 5-imidazolyl, 2-, 4- or 5-thiazolyl, 3-(1,2,4-triazyl), 2-(1,3,5-triazyl), 6-quinaldyl, 3-, 5-, 6- or 8-quinolinyl, 2-benzoxazolyl, 2-benzothiazolyl, 5-benzothiadiazolyl, 2- or 5-benzimidazolyl or 1- or 5-isoquinolyl, each of which may be substituted by C₁-C₆-alkyl, C₁-C₆-alkoxy or cyano.

7. A process for the preparation of 9-bromoperylene-3,4-dicarboximide of the general formula IIIa 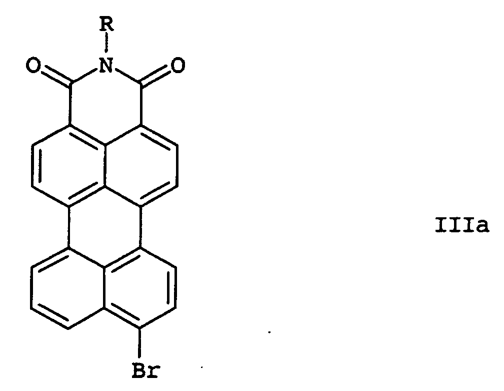 where
R is hydrogen or C₁-C₃₀-alkyl, whose carbon chain may be interrupted by one or more -O-, -S-, -NR¹-, -CO- and/or - SO₂- groups and which may be monosubstituted or polysubstituted by cyano, C₁-C₆-alkoxy, phenyl or 2-naphthyl, each of which may be substituted by C₁-C₁₈-alkyl or C₁-C₆-alkoxy, or a 5- to 7-membered heterocyclic radical which is bonded via a nitrogen atom and may contain further heteroatoms and may be aromatic;
C₅-C₈-cycloalkyl, whose carbon skeleton may be interrupted by one or more -O-, -S- and/or -NR¹- groups and which may be monosubstituted or polysubstituted by C₁-C₆-alkyl;
phenyl, 2-naphthyl, 2- or 3-pyrryl, 2-, 3- or 4-pyridyl, 2-, 4- or 5-pyrimidyl, 3-, 4- or 5-pyrazolyl, 2-, 4- or 5-imidazolyl, 2-, 4- or 5-thiazolyl, 3-(1,2,4-triazyl), 2-(1,3,5-triazyl), 6-quinaldyl, 3-, 5-, 6- or 8-quinolinyl, 2-benzoxazolyl, 2-benzothiazolyl, 5-benzothiadiazolyl, 2- or 5-benzimidazolyl or 1- or 5-isoquinolyl, each of which may be monosubstituted or polysubstituted by C₁-C₁₈-alkyl, C₁-C₆-alkoxy, cyano, - CONHR², -NHCOR² and/or phenylazo, 2-naphthylazo, 2-pydridylazo or 2-pyrimidylazo, each of which may be substituted by C₁-C₁₀-alkyl, C₁-C₆-alkoxy or cyano;
R¹ is hydrogen or C₁-C₆-alkyl;
R² is hydrogen; C₁-C₁₈-alkyl; phenyl, 2-naphthyl, 2- or 3-pyrryl, 2-, 3- or 4-pyridyl, 2-, 4- or 5-pyrimidyl, 3-, 4- or 5-pyrazolyl, 2-, 4- or 5-imidazolyl, 2-, 4- or 5-thiazolyl, 3-(1,2,4-triazyl), 2-(1,3,5-triazyl), 6-quinaldyl, 3-, 5-, 6- or 8-quinolinyl, 2-benzoxazolyl, 2-benzothiazolyl, 5-benzothiadiazolyl, 2- or 5-benzimidazolyl or 1- or 5-isoquinolyl, each of which may be substituted by C₁-C₆-alkyl, C₁-C₆-alkoxy or cyano,
which comprises reacting a perylene-3,4-dicarboximide of the general formula IIa 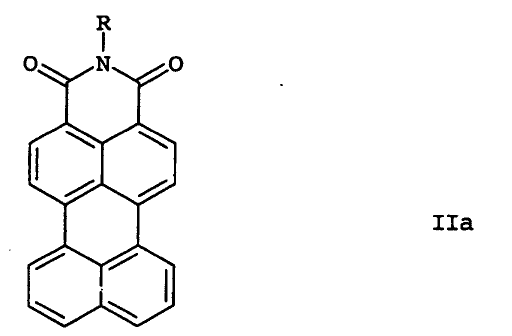 with elemental bromine in the presence of an aliphatic monocarboxylic acid.

8. The use of a rylene dye of the formula I as claimed in claim 1 for coloring high-molecular-weight organic and inorganic materials.

9. The use as claimed in claim 8, wherein plastics, surface coatings, printing inks and oxidic layer systems are colored.

10. The use as claimed in claim 8 or 9, wherein laser-markable and laser-inscribable colorings are produced.

## Revendications

1. Colorants rylène thermochromes de formule générale I 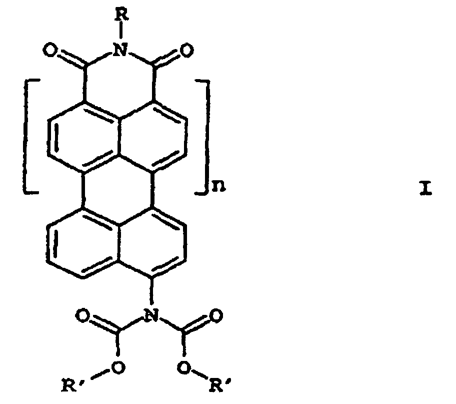 dans laquelle les variables ont la signification suivante :
R représente un atome d'hydrogène ou un groupe alkyle en C₁ à C₃₀, dont la chaîne carbonée peut être interrompue par un ou plusieurs groupements -O-, -S-, -NR¹-, -CO- et/ou -SO₂-, et qui peut être substitué une ou plusieurs fois par un groupe cyano, alcoxy en C₁ à C₆, phényle ou 2-naphtyle, qui peut être à chaque fois substitué par un groupe alkyle en C₁ à C₁₈ ou alcoxy en C₁ à C₆, ou un groupe hétérocyclique de 5 à 7 éléments, lié par l'intermédiaire d'un atome d'azote, qui peut contenir d'autres hétéroatomes et qui peut être aromatique ;
un groupe cycloalkyle en C₅ à C₈, dont le squelette carboné peut être interrompu par un ou plusieurs groupements -O-, -S- et/ou -NR¹-, et qui peut être substitué une ou plusieurs fois par un groupe alkyle en C₁ à C₆ ;
un groupe phényle, 2-naphtyle, 2- ou 3-pyrryle, 2-, 3- ou 4-pyridyle, 2-, 4- ou 5-pyrimidyle, 3-, 4- ou 5-pyrazolyle, 2-, 4- ou 5-imidazolyle, 2-, 4- ou 5-thiazolyle, 3-(1,2,4-triazyle), 2-(1,3,5-triazyle), 6-quinaldyle, 3-, 5-, 6- ou 8-quinolinyle, 2-benzoxazolyle, 2-benzothiazolyle, 5-benzothiadiazolyle, 2- ou 5-benzimidazolyle ou 1- ou 5-isoquinolyle, qui peut être à chaque fois substitué une ou plusieurs fois par un groupe alkyle en C₁ à C₁₈, alcoxy en C₁ à C₆, cyano, -CONHR², -NHCOR² et/ou phénylazoïque, 2-naphtylazoïque, 2-pyridylazoïque ou 2-pyrimidylazoïque, qui peut être à chaque fois substitué par un groupe alkyle en C₁ à C₁₀, alcoxy en C₁ à C₆ ou cyano ;
R' représente un groupe alkyle en C₂ à C₃₀, dont la chaîne carbonée peut être interrompue par un ou plusieurs groupements -O- et/ou -CO-, et qui peut être substitué une ou plusieurs fois par un groupe cyano, alcoxy en C₁ à C₆, cycloalkyle en C₅ à C₈, dont le squelette carboné peut être interrompu par un ou plusieurs groupements -O-, -S- et/ou -NR¹-, et qui peut être substitué par un groupe alkyle en C₁ à C₆, phényle ou 2-naphtyle, qui peut être à chaque fois substitué par un groupe alkyle en C₁ à C₁₈ ou alcoxy en C₁ à C₆, ou un groupe hétérocyclique de 5 à 7 éléments, lié par l'intermédiaire d'un atome d'azote, qui peut contenir d'autres hétéroatomes et qui peut être aromatique ;
un groupe méthyle qui est substitué une ou deux fois par un groupe phényle, 2-naphtyle, 2- ou 3-pyrryle, 2-, 3- ou 4-pyridyle, 2-, 4- ou 5-pyrimidyle, 3-, 4- ou 5-pyrazolyle, 2-, 4- ou 5-imidazolyle, 2-, 4- ou 5-thiazolyle, 3-(1,2,4-triazyle), 2-(1,3,5-triazyle), 6-quinaldyle, 3-, 5-, 6- ou 8-quinolinyle, 2-benzoxazolyle, 2-benzothiazolyle, 5-benzothiadiazolyle, 2- ou 5-benzimidazolyle ou 5-isoquinolyle et/ou cycloalkyle en C₅ à C₈, qui peut être à chaque fois substitué par un groupe alkyle en C₁ à C₁₈ ou alcoxy en C₁ à C₆ ;
un groupe cycloalkyle en C₅ à C₈, dont le squelette carboné peut être interrompu par un ou plusieurs groupements -O-, -S- et/ou -NR¹-, et qui peut être substitué une ou plusieurs fois par un groupe alkyle en C₁ à C₆ ;
R¹ représente un atome d'hydrogène ou un groupe alkyle en C₁ à C₆ ;
R² représente un atome d'hydrogène ; un groupe alkyle en C₁ à C₁₈ ; un groupe phényle, 2-naphtyle, 2- ou 3-pyrryle, 2-, 3- ou 4-pyridyle, 2-, 4- ou 5-pyrimidyle, 3-, 4- ou 5-pyrazolyle, 2-, 4- ou 5-imidazolyle, 2-, 4- ou 5-thiazolyle, 3-(1,2,4-triazyle), 2-(1,3,5-triazyle), 6-quinaldyle, 3-, 5-, 6- ou 8-quinolinyle, 2-benzoxazolyle, 2-benzothiazolyle, 5-benzothiadiazolyle, 2- ou 5-benzimidazolyle ou 1- ou 5-isoquinolyle, qui peut être à chaque fois substitué par un groupe alkyle en C₁ à C₆, alcoxy en C₁ à C₆ ou cyano ;
n vaut 0 ou 1.

2. Colorants rylène de formule I, selon la revendication 1, dans laquelle les variables ont la signification suivante :
R représente un atome d'hydrogène ou un groupe alkyle en C₁ à C₃₀, dont la chaîne carbonée peut être interrompue par un ou plusieurs groupements -O- et/ou -CO-, et qui peut être substitué une ou plusieurs fois par un groupe cyano, alcoxy en C₁ à C₆, phényle ou 2-naphtyle, qui peut être à chaque fois substitué par un groupe alkyle en C₁ à C₁₈ ou alcoxy en C₁ à C₆, ou un groupe hétérocyclique de 5 à 7 éléments, lié par l'intermédiaire d'un atome d'azote, qui peut contenir d'autres hétéroatomes et qui peut être aromatique ;
un groupe cycloalkyle en C₅ à C₈, dont le squelette carboné peut être interrompu par un ou plusieurs groupements -O- et/ou -NR¹-, et qui peut être substitué une ou plusieurs fois par un groupe alkyle en C₁ à C₆ ;
un groupe phényle, 2-naphtyle, 2- ou 3-pyrryle, 2-, 3- ou 4-pyridyle, 2-, 4- ou 5-pyrimidyle, 3-, 4- ou 5-pyrazolyle, 2-, 4- ou 5-imidazolyle, 2-, 4- ou 5-thiazolyle, 3-(1,2,4-triazyle), 2-(1,3,5-triazyle), 6-quinaldyle, 3-, 5-, 6- ou 8-quinolinyle, 2-benzoxazolyle, 2-benzothiazolyle, 5-benzothiadiazolyle, 2- ou 5-benzimidazolyle ou 1- ou 5-isoquinolyle, qui peut être à chaque fois substitué par un groupe alkyle en C₁ à C₁₈, alcoxy en C₁ à C₆, cyano, -CONHR² ou -NHCOR² ;
R' représente un groupe alkyle en C₂ à C₃₀, dont la chaîne carbonée peut être interrompue par un ou plusieurs groupements -O- et/ou -CO-, et qui peut être substitué une ou plusieurs fois par un groupe alcoxy en C₁ à C₆, cycloalkyle en C₅ à C₈, dont le squelette carboné peut être interrompu par un ou plusieurs groupements -O- et/ou -NR¹-, et qui peut être substitué par un groupe alkyle en C₁ à C₆, ou phényle ou 2-naphtyle, qui peut être à chaque fois substitué par un groupe alkyle en C₁ à C₁₈ ou alcoxy en C₁ à C₆ ;
un groupe méthyle qui est substitué une ou deux fois par un groupe phényle, 2-naphtyle et/ou cycloalkyle en C₅ à C₈, qui peut être à chaque fois substitué par un groupe alkyle en C₁ à C₁₈ ou alcoxy en C₁ à C₆ ;
un groupe cycloalkyle en C₅ à C₈, dont le squelette carboné peut être interrompu par un ou plusieurs groupements -O- et/ou -NR¹-, et qui peut être substitué une ou plusieurs fois par un groupe alkyle en C₁ à C₆ ;

3. Colorants rylène de formule I, selon la revendication 1, dans laquelle les variables ont la signification suivante :
R représente un atome d'hydrogène ou un groupe alkyle en C₁ à C₃₀, dont la chaîne carbonée peut être interrompue par un ou plusieurs groupements -O- et/ou -CO-, et qui peut être substitué une ou plusieurs fois par un groupe alcoxy en C₁ à C₆ ou phényle ou 2-naphtyle, qui peut être à chaque fois substitué par un groupe alkyle en C₁ à C₁₈ ou alcoxy en C₁ à C₆ ;
un groupe cycloalkyle en C₅ à C₈ qui peut être substitué une ou plusieurs fois par un groupe alkyle en C₁ à C₆ ;
un groupe phényle ou 2-naphtyle, qui peut être à chaque fois substitué par un groupe alkyle en C₁ à C₁₈, alcoxy en C₁ à C₆ ou cyano ;
R' représente un groupe alkyle en C₂ à C₃₀, dont la chaîne carbonée peut être interrompue par un ou plusieurs groupements -O-, et qui peut être substitué une ou plusieurs fois par un groupe alcoxy en C₁ à C₆, cycloalkyle en C₅ à C₈, qui peut être substitué par un groupe alkyle en C₁ à C₆, ou phényle ou 2-naphtyle, qui peut être à chaque fois substitué par un groupe alkyle en C₁ à C₁₈ ou alcoxy en C₁ à C₆ ;
un groupe méthyle qui est substitué une ou deux fois par un groupe phényle, 2-naphtyle et/ou cycloalkyle en C₅ à C₈, qui peut être à chaque fois substitué par un groupe alkyle en C₁ à C₁₈ ou alcoxy en C₁ à C₆ ;
un groupe cycloalkyle en C₅ à C₈ qui peut être substitué une ou plusieurs fois par un groupe alkyle en C₁ à C₆.

4. Procédé de production de colorants rylène de formule I, selon la revendication 1, **caractérisé en ce que**
a) l'on brome de manière régiosélective avec du brome élémentaire un imide d'acide pérylène-3,4-dicarboxylique de formule générale IIa 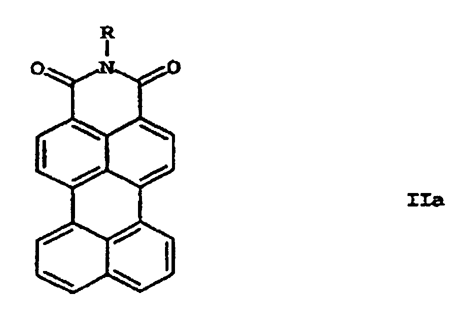 en présence d'un acide monocarboxylique aliphatique,
b1) l'on fait réagir l'imide d'acide 9-bromopérylène-3,4-dicarboxylique de formule générale IIIa 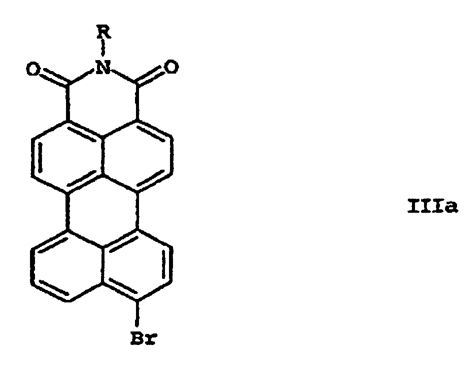 formé dans l'étape a) ou un imide d'acide 4-bromonaphtalène-1,8-dicarboxylique de formule générale IIIb 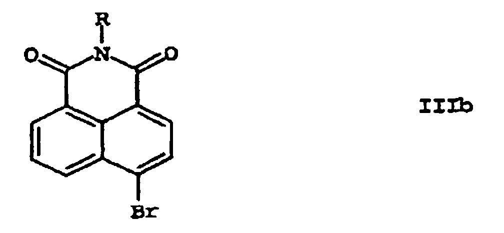 préparé de manière connue par imidification de l'anhydride 4-bromonaphtalène-1,8-dicarboxylique, en présence d'un solvant organique aprotique, d'un système de catalyseur de métal de transition et d'une base dans une réaction de couplage aryle-N avec une benzophénone-imine de formule générale IV 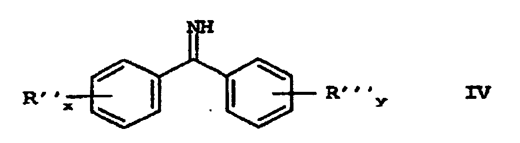 dans laquelle les variables
R'', R''' représentent, indépendamment l'un de l'autre, un atome d'hydrogène, un groupe alkyle en C₁ à C₆ ou alcoxy en C₁ à C₆ et
x, y représentent, indépendamment l'un de l'autre, un nombre entier de 1 à 3,
et
b2) l'on hydrolyse la cétimine formée en présence d'un acide et d'un solvant aprotique polaire pour former un imide d'acide aminorylènedicarboxylique de formule générale V 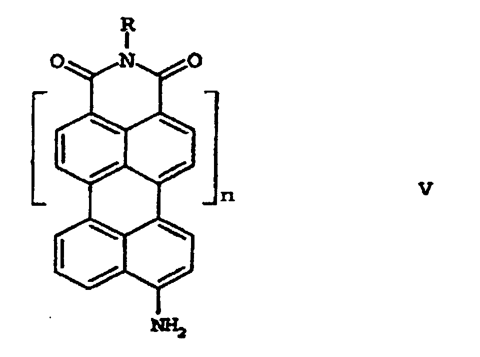 et
c) l'on fait ensuite réagir ce dernier en présence d'un solvant aprotique polaire et d'une base avec un dicarbonate de formule générale VI 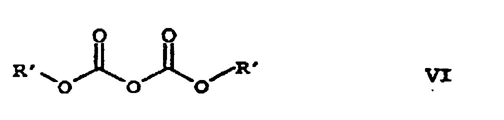 pour former le colorant rylène I.

5. Procédé de production d'imides d'acides aminorylènedicarboxyliques de formule générale V 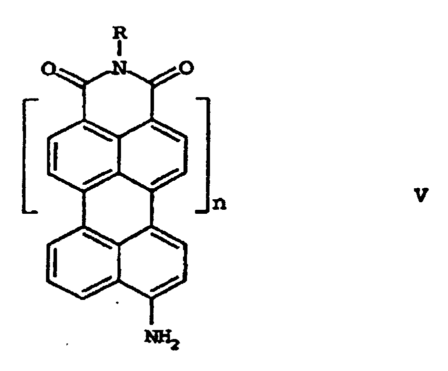 dans laquelle les variables ont la signification suivante :
R représente un atome d'hydrogène ou un groupe alkyle en C₁ à C₃₀, dont la chaîne carbonée peut être interrompue par un ou plusieurs groupements -O-, -S-, -NR¹-, -CO- et/ou -SO₂, et qui peut être substitué une ou plusieurs fois par un groupe cyano, alcoxy en C₁ à C₆, phényle ou 2-naphtyle; qui peut être à chaque fois substitué par un groupe alkyle en C₁ à C₁₈ ou alcoxy en C₁ à C₆, ou un groupe hétérocyclique de 5 à 7 éléments lié par un atome d'azote, qui peut contenir d'autres hétéroatomes et qui peut être aromatique ;
un groupe cycloalkyle en C₅ à C₈, dont le squelette carboné peut être interrompu par un ou plusieurs groupements -O-, -S- et/ou -NR¹-, et qui peut être substitué une ou plusieurs fois par un groupe alkyle en C₁ à C₆ ;
un groupe phényle, 2-naphtyle, 2- ou 3-pyrryle, 2-, 3- ou 4-pyridyle, 2-, 4- ou 5-pyrimidyle, 3-, 4- ou 5-pyrazolyle, 2-, 4- ou 5-imidazolyle, 2-, 4- ou 5-thiazolyle, 3-(1,2,4-triazyle), 2-(1,3,5-triazyle), 6-quinaldyle, 3-, 5-, 6- ou 8-quinolinyle, 2-benzoxazolyle, 2-benzothiazolyle, 5-benzothiadiazolyle, 2- ou 5-benzimidazolyle ou 1- ou 5-isoquinolyle, qui peut être à chaque fois substitué une ou plusieurs fois par un groupe alkyle en C₁ à C₁₈, alcoxy en C₁ à C₆, cyano, -CONHR², -NHCOR² et/ou arylazoïque ou hétarylazoïque, qui peut être à chaque fois substitué par un groupe alkyle en C₁ à C₁₀, alcoxy en C₁ à C₆ ou cyano ;
R¹ représente un atome d'hydrogène ou un groupe alkyle en C₁ à C₆ ;
R² représente un atome d'hydrogène ; un groupe alkyle en C₁ à C₁₈ ; un groupe phényle, 2-naphtyle, 2- ou 3-pyrryle, 2-, 3- ou 4-pyridyle, 2-, 4- ou 5-pyrimidyle, 3-, 4- ou 5-pyrazolyle, 2-, 4- ou 5-imidazolyle, 2-, 4- ou 5-thiazolyle, 3-(1,2,4-triazyle), 2-(1,3,5-triazyle), 6-quinaldyle, 3-, 5-, 6- ou 8-quinolinyle, 2-benzoxazolyle, 2-benzothiazolyle, 5-benzothiadiazolyle, 2- ou 5-benzimidazolyle ou 1- ou 5-isoquinolyle, qui peut être à chaque fois substitué par un groupe alkyle en C₁ à C₆, alcoxy en C₁ à C₆ ou cyano ;
n vaut 0 ou 1,
**caractérisé en ce que** l'on fait réagir un imide d'acide bromorylènedicarboxylique de formule générale III 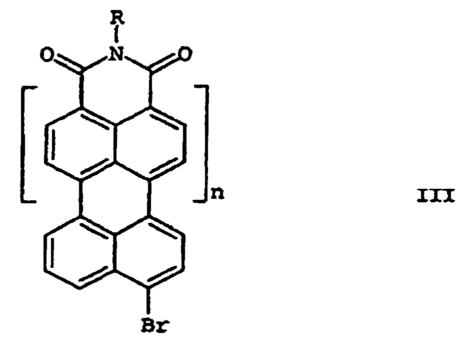 en présence d'un solvant organique aprotique, d'un système de catalyseur de métal de transition et d'une base dans une réaction de couplage aryle-N avec une benzophénone-imine de formule générale IV 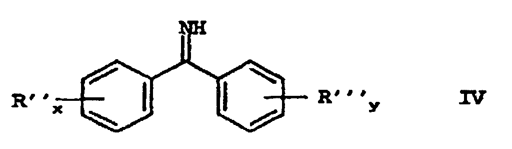 et que l'on hydrolyse la cétimine formée en présence d'un acide et d'un solvant aprotique polaire.

6. Imides d'acide 9-aminopérylène-3,4-dicarboxylique de formule générale Va 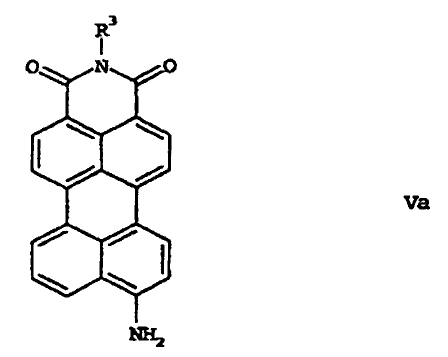 dans laquelle les variables ont la signification suivante :
R³ représente un atome d'hydrogène ou un groupe alkyle en C₁ à C₃₀, dont la chaîne carbonée est interrompue par un ou plusieurs groupements -O-, -S-, -NR¹-, - CO- et/ou -SO₂- et/ou qui peut être substitué une ou plusieurs fois par un groupe cyano, alcoxy en C₁ à C₆, phényle ou 2-naphtyle, qui peut être à chaque fois substitué par un groupe alkyle en C₁ à C₁₈ ou alcoxy C₁ à C₆, ou un groupe hétérocyclique de 5 à 7 éléments, lié par l'intermédiaire d'un atome d'azote, qui peut contenir d'autres hétéroatomes et qui peut être aromatique ;
un groupe cycloalkyle en C₅ à C₈, dont le squelette carboné peut être interrompu par un ou plusieurs groupements -O-, -S- et/ou -NR¹-, et qui peut être substitué une ou plusieurs fois par un groupe alkyle en C₁ à C₆ ;
un groupe phényle, 2-naphtyle, 2- ou 3-pyrryle, 2-, 3- ou 4-pyridyle, 2-, 4- ou 5-pyrimidyle, 3-, 4- ou 5-pyrazolyle, 2-, 4- ou 5-imidazolyle, 2-, 4- ou 5-thiazolyle, 3-(1,2,4-triazyle), 2-(1,3,5-triazyle), 6-quinaldyle, 3-, 5-, 6- ou 8-quinolinyle, 2-benzoxazolyle, 2-benzothiazolyle, 5-benzothiadiazolyle, 2- ou 5-benzimidazolyle ou 1- ou 5-isoquinolyle, qui peut être à chaque fois substitué par un groupe alkyle en C₁ à C₁₈, alcoxy en C₁ à C₆, cyano, -CONHR², -NHCOR² et/ou un groupe phénylazoïque, 2-naphtylazoïque, 2-pyridylazoïque ou 2-pyrimidylazoïque, qui peut être à chaque fois substitué par un groupe alkyle en C₁ à C₁₀, alcoxy en C₁ à C₆ ou cyano ;
R¹ représente un atome d'hydrogène ou un groupe alkyle en C₁ à C₆ ;
R² représente un atome d'hydrogène ; un groupe alkyle en C₁ à C₁₈ ; un groupe phényle, 2-naphtyle, 2- ou 3-pyrryle, 2-, 3- ou 4-pyridyle, 2-, 4- ou 5-pyrimidyle, 3-, 4- ou 5-pyrazolyle, 2-, 4- ou 5-imidazolyle, 2-, 4- ou 5-thiazolyle, 3-(1,2,4-triazyle), 2-(1,3,5-triazyle), 6-quinaldyle, 3-, 5-, 6- ou 8-quinolinyle, 2-benzoxazolyle, 2-benzothiazolyle, 5-benzothiadiazolyle, 2- ou 5-benzimidazolyle ou 1- ou 5-isoquinolyle, qui peut être à chaque fois substitué par un groupe alkyle en C₁ à C₆, alcoxy en C₁ à C₆ ou cyano.

7. Procédé de production d'imides d'acide 9-bromopérylène-3,4-dicarboxylique de formule générale IIIa 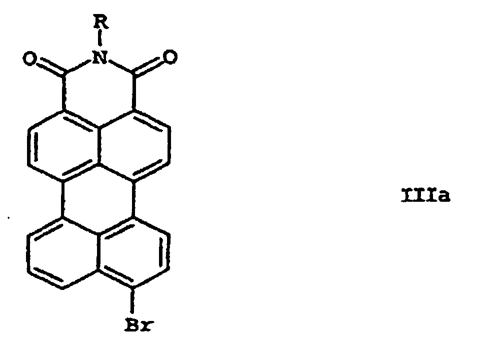 dans laquelle les variables ont la signification suivante :
R représente un atome d'hydrogène ou un groupe alkyle en C₁ à C₃₀, dont la chaîne carbonée peut être interrompue par un ou plusieurs groupements -O-, -S-, -NR¹-, -CO- et/ou -SO₂, et qui peut être substitué une ou plusieurs fois par un groupe cyano, alcoxy en C₁ à C₆, phényle ou 2-naphtyle, qui peut être à chaque fois substitué par un groupe alkyle en C₁ à C₁₈ ou alcoxy en C₁ à C₆, ou un groupe hétérocyclique de 5 à 7 éléments lié par un atome d'azote, qui peut contenir d'autres hétéroatomes et qui peut être aromatique ;
un groupe cycloalkyle en C₅ à C₈, dont le squelette carboné peut être interrompu par un ou plusieurs groupements -O-, -S- et/ou -NR¹-, et qui peut être substitué une ou plusieurs fois par un groupe alkyle en C₁ à C₆ ;
un groupe phényle, 2-naphtyle, 2- ou 3-pyrryle, 2-, 3- ou 4-pyridyle, 2-, 4- ou 5-pyrimidyle, 3-, 4- ou 5-pyrazolyle, 2-, 4- ou 5-imidazolyle, 2-, 4- ou 5-thiazolyle, 3-(1,2,4-triazyle), 2-(1,3,5-triazyle), 6-quinaldyle, 3-, 5-, 6- ou 8-quinolinyle, 2-benzoxazolyle, 2-benzothiazolyle, 5-benzothiadiazolyle, 2- ou 5-benzimidazolyle ou 1- ou 5-isoquinolyle, qui peut être à chaque fois substitué une ou plusieurs fois par un groupe alkyle en C₁ à C₁₈, alcoxy en C₁ à C₆, cyano, -CONHR², -NHCOR² et/ou phénylazoïque, 2-naphtylazoïque, 2-pyridylazoïque ou 2-pyrimidylazoïque, qui peut être à chaque fois substitué par un groupe alkyle en C₁ à C₁₀, alcoxy en C₁ à C₆ ou cyano ;
R¹ représente un atome d'hydrogène ou un groupe alkyle en C₁ à C₆ ;
R² représente un atome d'hydrogène ; un groupe alkyle en C₁ à C₁₈ ; un groupe phényle, 2-naphtyle, 2- ou 3-pyrryle, 2-, 3- ou 4-pyridyle, 2-, 4- ou 5-pyrimidyle, 3-, 4- ou 5-pyrazolyle, 2-, 4- ou 5-imidazolyle, 2-, 4- ou 5-thiazolyle, 3-(1,2,4-triazyle), 2-(1,3,5-triazyle), 6-quinaldyle, 3-, 5-, 6- ou 8-quinolinyle, 2-benzoxazolyle, 2-benzothiazolyle, 5-benzothiadiazolyle, 2- ou 5-benzimidazolyle ou 1- ou 5-isoquinolyle, qui peut être à chaque fois substitué par un groupe alkyle en C₁ à C₆, alcoxy en C₁ à C₆ ou cyano ;
**caractérisé en ce que** l'on fait réagir avec du brome élémentaire un imide d'acide pérylène-3,4-dicarboxylique de formule générale IIa 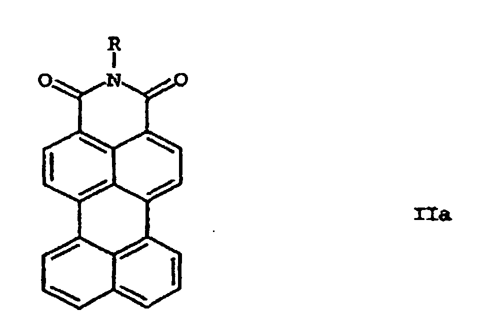 en présence d'un acide monocarboxylique aliphatique.

8. Utilisation de colorants rylène de formule I, selon la revendication 1, pour colorer des matières organiques et inorganiques de masse moléculaire élevée.

9. Utilisation selon la revendication 8, **caractérisée en ce que** l'on colore des matières plastiques, des vernis, des encres d'impression et des systèmes stratifiés contenant des oxydes.

10. Utilisation selon la revendication 8 ou 9, **caractérisée en ce que** l'on produit des colorations marquables au laser et imprimables au laser.
